# EUROPÄISCHE PATENTSCHRIFT

(11) **EP 1 240 237 B1**
(45) Veröffentlichungstag und Bekanntmachung des Hinweises auf die Patenterteilung: **28.09.2005**
(21) Anmeldenummer: 00993516.4
(22) Anmeldetag: 30.11.2000
(51) Int. Cl.: C08G 69/20, C08G 69/18

(54) **FLÜSSIGINITIATOR ZUR BESCHLEUNIGTEN DURCHFÜHRUNG DER ANIONISCHEN LACTAMPOLYMERISATION, VERFAHREN ZU DESSEN HERSTELLUNG UND VERWENDUNG**
LIQUID INITIATOR FOR CARRYING OUT ANIONIC LACTAM POLYMERIZATION IN AN ACCELERATED MANNER, METHOD FOR THE PRODUCTION THEREOF AND ITS USE
INITIATEUR LIQUIDE POUR ACCELERER LE DEROULEMENT DE LA POLYMERISATION ANIONIQUE DE LACTAME, PROCEDE PERMETTANT DE LE PREPARER ET SON UTILISATION

(30) Priorität: 21.12.1999 DE 19961819
(43) Veröffentlichungstag der Anmeldung: 18.09.2002
(73) Patentinhaber: EMS-Chemie AG, 7013 Domat/Ems (CH)
(72) Erfinder: SCHMID, Eduard, CH-7402 Bonaduz (CH); LAUDONIA, Ivano, CH-7430 Thusis (CH)
(74) Vertreter: Pfenning, Meinig & Partner GbR
(86) Internationale Anmeldenummer: PCT/EP2000/012053
(87) Internationale Veröffentlichungsnummer: WO 2001/046293

(56) Entgegenhaltungen:
- EP-A- 0 786 484
- EP-A- 0 872 508
- DE-A- 2 230 732
- GB-A- 1 099 759

## Beschreibung

Die Erfindung betrifft einen neuartigen Flüssiginitiator für die beschleunigte Durchführung der Polymerisation von Lactam, dessen Herstellung, seine Verwendung sowie die daraus hergestellten Gebrauchsgegenstände.

Flüssigkatalysatoren für die Polymerisation von Lactam sind seit längerem bekannt. Sie beinhalten Zusätze zu Natriumcaprolactamat, die bewirken, daß es bei Raumtemperatur flüssig ist. Diese Katalysatoren beschleunigen die Polymerisation nicht ausreichend und müssen in relativ hoher Konzentration angewendet werden. Beispiele sind DE 2 230 732 C3 sowie EP 0 438 762 B1. Mit DE 16 602 683 und DE 19 602 684 sind erstmals Flüssigkatalysatoren beschrieben, die zusätzlich eine beschleunigende Wirkung auf die Polymerisation ausüben. Sie bestehen insbesondere aus N-substituierten, cyclischen Harnstoffen bzw. N-substituierten Säureamiden, einem Acylierungsmittel für Lactam und käuflichem Natriumcaprolactamat, gelöst in Lactam-6. Nachteil ist, daß sie in relativ hoher Konzentration angewendet werden müssen, was die Polymereigenschaften beeinflussen kann, indem z.B. der Modul herabgesetzt wird, ein Ausschwitzen der Solvatisierungskomponenten erfolgen kann sowie auch die Haftung zu als Option verwendeten Füllstoffen beeinträchtigt werden kann.

Mit DE 197 15 679 A1 ist eine Synthese von Flüssigkatalysator aufgezeigt, die viele dieser Nachteile eliminiert. So wird direkt im Solvatisierungsmittel lactamfreies Natriumcaprolactamat hergestellt und mit bevorzugt Carbodiimid umgesetzt. Zur Durchführung der Lactampolymerisation genügt bereits ein Gewichtsanteil von ca. 1 % solcher Katalysatoren.

Aus der DE 196 03 305 C2 ist weiterhin ein flüssiges Mehrkomponentensystem für die Durchführung der anionischen Lactampolymerisation bekannt bei dem ein Solvatisierungsmittel, ein Katalysator und ein Aktivator zusammen als Mehrkomponentensystem eingesetzt wird. Bei diesem Mehrkomponentensystem werden somit die einzelnen Komponenten in solvatisierter Form als Flüssigkatalysator eingesetzt. Nachteilig ist hierbei u.a. die begrenzte Lagerfähigkeit.

In den bisher offenbarten Verfahren zur Polymerisation von Lactam mit Hilfe von Flüssigkatalysator mit beschleunigender Wirkung sind hauptsächlich Natriumcaprolactamat, das Lactam acylierende Verbindungen sowie Solvatisierungsmittel die verwendeten Ausgangsstoffe.

Für viele Anwendungen sind jedoch Flüssigkatalysatoren bzw. andere Systeme erwünscht, die nur aus einer Komponente bestehen und die kein Natriumcaprolactamat enthalten und damit in noch geringerer Konzentration angewendet werden können. Ziel ist es weiterhin, natriumcaprolactamatfreie Flüssigsysteme bereit zu stellen, die die Startphase der Polymerisation gezielt zu steuern vermögen.

Ferner sind lagerstabile Flüssigsysteme von hohem Interesse, welche Bausteine mitenthalten die das Verarbeitungsverhalten sowie die Endprodukteigenschaften positiv beeinflussen, wie z.B. das Entformen der Fertigteile erleichtern oder auch die Oxidations-, Hitze- und Bewitterungsstabilität verbessern.

Die Aufgabe wird in bezug auf das Flüssigsystem durch die Merkmale des Patentanspruches 1 in bezug auf das Herstellungsverfahren durch die Merkmale des Patentanspruches 20 gelöst. Das Polymergranulat ist durch die kennzeichnenden Merkmale des Anspruchs 26 definiert. Die Verwendung der FI ist in Anspruch 31 angegeben. Die Unteransprüche zeigen vorteilhafte Weiterbildungen auf.

Die Erfindung betrifft somit einen Flüssiginitiator, ein Verfahren zu dessen Herstellung und die Verwendung.

Der erfindungsgemäße Initiator ersetzt somit die aus dem Stand der Technik bisher bekannten Mehrkomponentensysteme. Der Initiator enthält dabei inhärent die notwendigen Strukturelemente, um bei Kontakt zu Lactam sowohl den Katalysator als auch den Aktivator zu bilden.

Kennzeichen des erfindungsgemäßen Initiators ist, daß das für die anionische Polymerisation von Lactam notwendige Metall-Lactamat noch nicht vorliegt sondern in einer Vorausreaktion erst gebildet wird.

Am Beispiel von mit Alkohol umgesetzten Isocyanat, das über Einwirkung einer starken Base deprotoniert ist, läßt sich dieser Reaktionsschritt, welcher der Lactampolymerisation vorgeschaltet ist, wie folgt darstellen (Reaktion I): 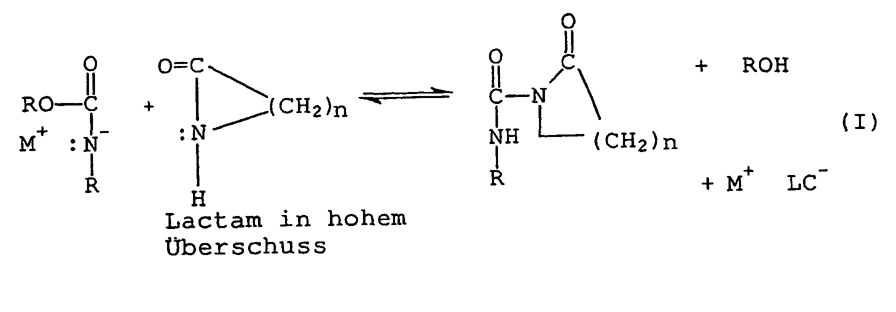 wobei HOR den gebildeten Alkohol und M⁺ LC⁻, Metall-lactamat bedeuten.

Im, beim Start der Polymerisation, vorliegenden, hohen Lactamüberschuß wird also die protische Verbindung P durch Lactam ersetzt, wodurch die für die beschleunigte Lactampolymerisation notwendige acylierte Lactamstruktur entsteht und der stark basische Stickstoff gleichzeitig Lactamat bildet, wodurch der eigentliche Katalysator entsteht und die Polymerisation ausgelöst wird.

Ist die protische Verbindung P niedermolekularer Alkohol z.B. Methanol, so erfolgt die Substitution rasch, und der flüchtige Alkohol kann leicht aus der Reaktionsmischung entweichen. Auch genügt für solche Systeme eine sehr niedere Anwendungskonzentration, was sie außerordentlich wirtschaftlich in ihrer Anwendung macht. Da das verwendete Isocyanat im Flüssiginitiator bereits zur Salzform umgesetzt ist, sind die Flüchtigkeit und stark toxische Wirkung des Isocyanats eliminiert, was die Anwendungssicherheit solcher Katalysatoren deutlich erhöht.

Ist P höhermolekular bzw. besitzt es eine sterische Hinderung, kann sich die Substitutionsreaktion verlangsamen und die Polymerisation von Lactam setzt erst mit einer Zeitverzögerung ein. Dies ist insbesondere dann von Bedeutung, wenn der Polymerisation eine spezielle Verfahrensstufe vorgelagert ist, wie z.B. die Imprägnation von Endlosfasergebilden wie z.B. Schichten aus Kohlefasergeweben, welche die Verstärkungsstrukturen von thermoplastischen Matrixcomposites bilden und zu deren wirtschaftlicher Herstellung eine tiefviskose Schmelze für die Imprägnation verfahrensentscheidend ist. Wegen der gezielten Bildung von aktiviertem Lactam und Natriumlactamat erst in der Polymerisationsvorstufe gemäß Reaktion I) eignet sich der erfindungsgemäße Initiator speziell gut für die Bildung von Polylactam als Matrix für Verbundwerkstoffe oder auch hochgefüllter Produkte.

Wählt man als protische Verbindung P direkt ein Molekül, das im Fertigprodukt Zusatzaufgaben erfüllt, wie z.B. die Stabilisierung gegen Hitze- und Bewitterungsschädigung oder ergänzend das Entformungsverhalten des Fertigteils verbessert, so kann es z.B. zufolge sterischer Hinderung oder ungenügender Basizität zur hinreichenden Deprotonierung von Lactam, zu Verzögerungen im Polymerisationsverlauf kommen. In solchen Fällen eignen sich Kombinationen von protischen Verbindungen. Dabei übernimmt z.B. ein Anteil die beabsichtigte Zusatzaufgabe und ein Anteil stellt eine hinreichend rasche Polymerisation sicher. In diesen Fällen verbleibt vorteilhafterweise ein definierter Anteil aus P niederer Alkohol oder auch Säureamid, wie z. B. Lactam-6, Lactam-4 oder Lactam-12.

Während in der Startphase der Polymerisation das Substitutionsgleichgewicht gemäß Reaktion I) den Polymerisationsverlauf steuert, ist in deren späterem Verlauf auch der Basizitätsunterschied zwischen Lactamat und deprotonierter Verbindung maßgebend mitbestimmend für den Reaktionsverlauf.

Um insbesondere in der Endphase der Polymerisation ohne wesentliche Polymerisationsverzögerung auszukommen, wählt man bevorzugt Carbonsäureamide als protische Verbindung, da ihr substituierbares H-Atom im wesentlichen dieselbe Acidität wie Lactam als cyclisches Carbonsäureamid besitzt. Carbonsäureamide, die bei höherem Molekulargewicht verzögert durch Lactam ersetzt werden, können danach als Zusatzaufgabe insbesondere das Entformungsverhalten des Fertigteils verbessern und Stabilität gegen Bewitterung und Hitzeabbau bewirken.

Aus stofflicher Sicht eignen sich als Solvatisierungsmittel S besonders aliphatische cycloaliphatische und aromatische organische Verbindungen mit solvatisierend wirkenden Strukturelementen, die keine aziden H-Atome besitzen. Solvatisierende Strukturelemente im Sinne der Erfindung sind beispielsweise Heteroatome und Heterogruppen der Art:
-O-, -CO-, -O-CO-O-, -SO₂-, -CO-NR-, -CO-O-, -NR-CO-O-, -NO-, -CN-, -RN-CO-NR-, -NR-, -P(OR)₃-, -PO(OR)₃- sowie Phenoläther.

Die Striche an den Strukturelementen bedeuten dabei die chemischen Bindungen der Strukturelemente in der organischen Verbindung, welche das Solvatisierungsmittel darstellt und ein Solvatisierungsmittelmolekül mehrere solvatisierende Strukturelemente enthalten kann.

Das Solvatisierungsmittel kann auch ein Gemisch mehrerer Solvatisierungskomponenten sein.

Geeignete Solvatisierungskomponenten sind insbesondere N-alkylierte, cyclische Carbonsäureamide wie N-alkyliertes Lactam-4, -5 und -6 beispielsweise N-Methyl-, N-Hexyl-, N-Cyclohexyl und N-octylpyrrolidon sowie N-Octyl und N-Methylcaprolactam und vollständig N-alkylierte, insbesondere cyclische Harnstoffderivate, wobei der Alkylrest, R, 1-12 C-Atome enthalten kann.

Diese Produkte entsprechen den Formeln 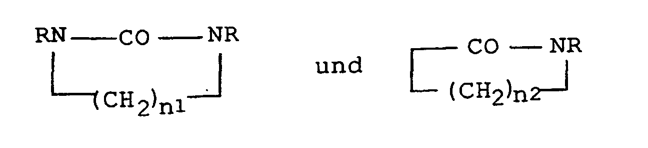 wobei n₁ 2 und 3 sowie n₂ 3-5 ist und R ein Alkylrest mit 1-12 C-Atomen, der auch Heterogruppen und Heteroatome wie -O- enthalten kann, ist.

Geeignete, nicht cyclische Harnstoffderivate und Säureamide sind z.B. Tetraalkylharnstoff, wie z.B. Tetrabutylharnstoff, Diäthylacetamid und Dibutylformamid.

Weitere Solvatisierungsmittel sind z.B. das cyclische Propylencarbonat, verätherte Polyole, z.B. der Grundstruktur H₃C-O-(CH₂-CH₂-O)ₙ-CH₃ mit einem Molekulargewicht bis ca. 1500, veresterte Polyglykole wie z.B. Di- und Triäthylenglykoldiacetat, flüssige Phthalsäureester und cyclische Äther wie z.B. Dioxan. Oft werden auch Mischungen der beschriebenen Solvatisierungsmittel verwendet.

Das Solvatisierungsmittel, S, muß in der Lage sein mit Hilfe seiner solvatisierenden Strukturelemente das deprotonierte Umsetzungsprodukt von Isocyanat mit P und dabei insbesondere das Kation so zu solvatisieren, daß ein bei Raumtemperatur flüssiges, lagerstabiles Produkt entsteht. Ferner ist es genügend stabil um als Reaktionsmedium zu dienen. Es muß bei der Auslösung der Polymerisation von Lactam, je nach gewählter Verfahrensvariante, genügend hoch sieden um keine Blasenbildung der Schmelze zu bewirken oder auch z.B. bei einer kontinuierlichen Verfahrensweise, z.B. in einem Doppelwellenextruder, zufolge genügender Flüchtigkeit teilweise oder vollständig entfernt werden können. Damit eignen sich je nach vorgesehenem Anwendungsverfahren sowohl hoch-, als auch tiefersiedende Komponenten S.

Will man z.B. in einem diskontinuierlichen Prozeß Verstärkungsfasergebilde mit frisch aktivierter Lactamschmelze blasenfrei imprägnieren, so sind Solvatisierungsmittel mit einem Siedepunkt von mindestens 200 °C vorteilhaft; will man im Extruder Lactam kontinuierlich zum Polylactam umsetzen, so ist ein tiefsiedendes Solvatisierungsmittel mit Siedepunkt z.B. unter 180 °C insbesondere dann vorteilhaft, wenn eine weichmachende Wirkung unerwünscht ist.

In vielen Fällen ist es speziell vorteilhaft, die Solvatisierungskomponente durch Verbindungen mit spezieller Wirkung zu erweitern. Diese können z.B. mithelfen das Polylactam nach erfolgter Polymerisation gegen die Einwirkung von Licht, Hitze und Oxidation zu schützen.

Auch Komponenten in geringen Anteilen die eine nukleierende oder entformende Wirkung im Polylactam ausüben sind oft erwünscht, ebenso Zusätze mit weichmachender Wirkung, wie z.B. o-Phthalsäureester, vollständig veresterte Polyole z.B. von Äthylenglykol oder Glycerin mit Essigsäure.

Weitere, oft hilfreiche Zusätze betreffen z.B. optische Aufheller und sogenannte Tracer. Die notwendige Einsatzmenge ist dabei überprüft und Stand der Technik und kann den technischen Datenblättern zu solchen Produkten entnommen werden.

Die protische Verbindung P, und die Base, B sind gemeinsam zu betrachten, wird doch im Falle der vorliegenden Erfindung P bevorzugt in der stark basischen, deprotonierten Form eingesetzt.

Man kann damit z.B. so vorgehen, daß man das Isocyanat mit P, z.B. einem Alkohol, umsetzt und das nun auf den Stickstoff übertragene H anschließend über Reaktion mit einer starken Base, wie z.B. Methylat, entfernt.

Dies läßt sich entsprechend Reaktionsfolge II darstellen. 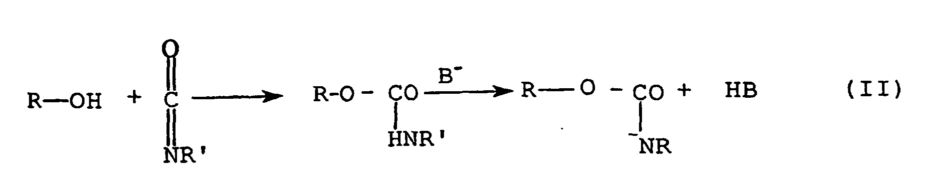 wobei die Umsetzung im gewählten Solvatiserungsmittel erfolgt und die protonierte Base (Beispiel Methanol) z.B. über Vakuumeinwirkung entfernt wird.

Alternativ wird P zunächst über Reaktion mit einer starken Base in die ebenfalls basische, anionische Form überführt und anschließend als Anion mit dem Isocyanat umgesetzt.

Geeignete protonische Verbindungen, mit hinreichend azidem H sind z.B. Alkohle ab C-Zahl 1 aufwärts bis 5. Geeignete Vertreter sind z.B. Methanol, Äthanol, Propanol, speziell geeignete P sind ferner Carbonsäureamide. Abhängig von ihrem strukturellen Aufbau können sie die Startphase der Polymerisation wesentlich beeinflussen und Zusatzaufgaben im Fertigteil übernehmen, wie z.B. das Entformungsverhalten verbessern. Bausteine für Carbonsäureamide sind Monomere mit 1-20 C-Atomen z.B. Mono und Diamine wie Hexylamin, Cylcohexylamin, Isotridecyclamin, Diaminohexan und äthergruppenhaltige Mono- und Diamine sowie Mono- und Dicarbonsäuren wie Essigsäure, 2-Ethylhexansäure, Pelargonsäure und Adipinsäure. Um niedermolekulare Carbonsäureamide bereitzustellen wird dabei z.B. ein Monoamin mit einer Monocarbonsäure oder ein Diamin mit 2 Moleinheiten Monocarbonsäure oder auch eine Dicarbonsäure mit 2 Moleinheiten Monoamin umgesetzt.

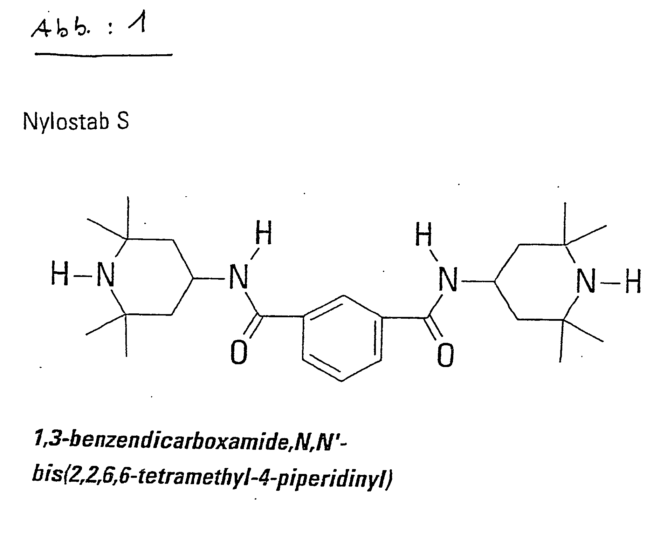

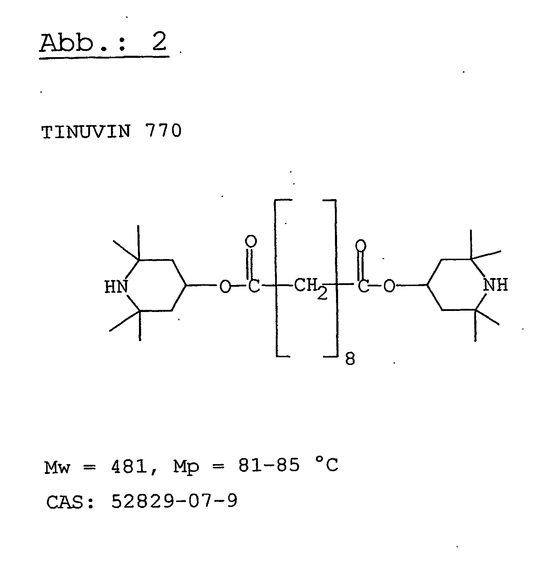

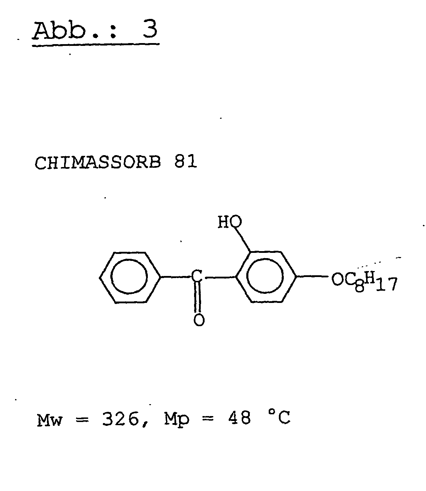

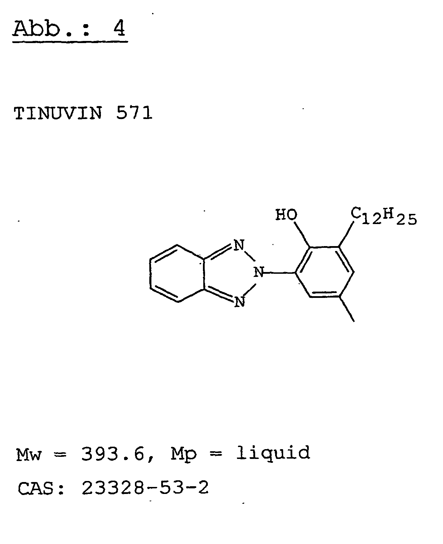

Ferner eignen sich spezielle, meist sterisch gehinderte Amine, die z.B. direkt auch Amidgruppen mitenthalten können und die das Polylactam gegen Hitze- und Lichteinwirkung zu stabilisieren vermögen, wie.z.B. die Handelsprodukte Nylostab S-EED® von Clariant sowie Tinuvin 770® von Ciba SC, sowie ergänzend die OH-Gruppen enthaltenden Stabilisatoren Chimassorb 81® und Tinuvin 571® ebenfalls von Ciba SC. Die chemischen Strukturen dieser Verbindungen sind in der Abb. 1 bis 4 dargestellt. Der Stabilisator Nylostab und Tinuvin 770 (Abb. 1) werden auch als "hindered amine light stabilizer" (HALS) bezeichnet.

Dies sind nur beispielhaft aufgeführte Stabilisatoren, denn sterisch gehinderte Amine und Hydroxygruppen, insbesondere phenolisches OH mitenthaltende Stabilisatoren sind wesentliche Verbindungsklassen, die als Hitze- und Lichtstabilisatoren für Polyamide dienen. Weitere, geeignete Anlagerungsverbindungen, P, sind z.B. Butanonoxim, Malonsäureester wie etwa Diethylmalonat, Azoverbindungen wie 1.2.4-Triazol und 3.5-Dimethylpyrazol. Soche Verbindungen sollten nur einen Anteil von P ausmachen und nur in Kombination mit Methylat eingesetzt werden.

Die Base B für die Deprotonierung z.B. gemäß Reaktion 2 muß eine für den Reaktionsablauf genügende Basizität aufweisen und bevorzugt nach der Deprotonierung des protischen Mittels unter Wärme- und Vakuumeinwirung kontinuierlich abgezogen werden können. Alternativ kann sie, wie z.B. das Methylat, direkt als P wirken und an das Isocyanat I anlagern.

Bevorzugt eingesetzte Basen haben ein Alkali-, Erdalkali- oder Tetraalkylammonium Kation und ein Alkoholat, Amid, Hydrid oder Alkylat als Anion. Ist das Anion z.B. Alkoholat, kann es direkt die Anlagerungsverbindung bilden.

Beispiele sind Alkali- und Erdalkalimetalkoholate, besonders Methylate und Ethylate, wie z.B. Natriummethylat und -ethylat oder Alkoholate von Lithium, Kalium und Magnesium oder auch Tetralkylammoniumalkoholat, Metallhydride, wie z.B. Natriumhydrid, Metallalkyle wie z.B. Butyllithium, Amide, wie z.B. Natriumamid, oder auch Alkali- und Erdalkalimetalle, die z.B. mittels Eisen(II)-Ionen aktiviert sein können.

Wird als Base ein niedermolekulares Alkoholat von Alkali oder Erdalkalimetall, wie z.B. Natriummethylat, verwendet, so wird es vorteilhaft direkt gelöst im entsprechenden Alkohol zugefügt, der während und nach erfolgter Umsetzung über Wärme- und Vakuumeinwirkung wieder entfernt wird. Dieses Konzept kann auch für andere der aufgeführten Basen wie z.B. Butyllithium, gelöst in Heptan, angewendet werden.

Bei extrem luft- und feuchteempfindlichen Basen, wie z.B. Metallhydriden oder Alkalimetall, wie z.B. Natrium, kann Petroläther oder ein Alkan direkt als Schutzmittel für die Lagerung und Zugabe dienen, wonach Entfernung dieser Art von Schutzmittel, wieder über Wärme- und Vakuumeinwirkung, erfolgt.

Diese Löse- und Schutzmittel für die Base unterscheiden sich somit in Aufgabe und Wirkung von den Solvatisierungmitteln.

Gemäß der Erfindung können Monoisocyanate und Diisocyanate, sowie Thioisocyanate die eine aliphatische, cycloaliphatische, aromatische oder aliphatisch-aromatische Grundstruktur haben und die aromatische Struktur z.B. halogeniert und alkyliert sein kann, eingesetzt werden.

Beispiele für flüssige Isocyanate, sind Phenylisocyanat und substituierte Phenylisocyanate, Cyclohexylisocyanat, Toluylendiisocyanat, Hexamethylendiisocyanat Isophorondiisocyanat und Diphenylmethandiisocyanat und Dieyclohexylmethandiisocyanat.

Dabei cyclisieren Isocyanate im basischen Milieu, insbesondere wenn sie keine sterische Hinderung besitzen, oft z.B. zu Isocyanuraten oder auch einer anderen Struktur wie z.B. Allophanat. Beim Umsatz unter Einwirkung der starken Base, insbesondere im stöchiometrischen Verhältnis zum Isocyanat wird dann diese Struktur im allgemeinen wieder zerstört und P⁻ reagiert mit dem Isocyanat (Reaktion I, Struktur links). Ein Hauptbeispiel ist dabei das Phenylisocyanat sowie substituierte, aromatische Monoisocyante.

Man kann auch Isocyanurate wie z.B. Tripropylisocyanurat oder Triphenylisocyanurat verwenden, wobei im basischen Milieu jedes Isocyanurat unter Rückspaltung in der Lage ist drei Lactame zu acylieren.

Der Flüssiginitiator FI kann auch ein Umsetzungsprodukt sein bei dem bis 50 % des Isocyanats durch ein Carbodiimid ersetzt worden ist. Das Carbodiimid kann eine aliphatische, cyloaliphatische, aromatische oder aliphatisch-aromatische Grundstruktur besitzen.

### Beispiele sind:

N,N'-Diisopropylcarbondiiumid, N,N'Di-(o-tolyl)-carbodiimid, N,N'-Dicyclohexylcarbodiimid, 2,2'6,6'-Tetraisoprophylphenylcarbodiimid und Poly-(2,2-diisopropyl)-p-phenylencarbodiimid.

Dem Initiator können ferner eigenschaft- und anwendungsbedingte Zusatzstoffe, Z, welche den Polymerisationsverlauf nicht oder nur wenig bzw. voraussehbar beeinflussen in definiertem Anteil zugefügt werden. Solche Zusatzstoffe sind z.B. Entformungsmittel, Hitze-, Licht- und Oxidationsstabilisatoren, Benetzungs- und Haftmittel zu Füllstoffen, Entschäumer, Nukleierungsmittel, Tracer, optische Aufheller, Weichmacher und Farbstoffe. Deren empfohlene Anwendungskonzentration kann meist aus den technischen Datenblättern zu solchen Produkten entnommen werden. Bevorzugte Zusatzstoffe sollten keine aziden H-Atome besitzen.

Das vorstehend beschriebene erfindungsgemäße Umsetzungsprodukt wird erhalten in der Weise, daß die Komponenten B:P:I in einem Molverhältnis zueinander von 0,2 bis 1,1:0,2 bis 4:1 verwendet werden. Ein bevorzugtes Molverhältnis von B:P:I ist 0,8 bis 1,1:0,8 bis 1,2:1.

Die Erfindung betrifft weiterhin ein Verfahren zur Herstellung des vorstehend beschriebenen Umsetzungsproduktes.

Grundkomponente des beschleunigend wirkenden Flüssiginitiators F, ist dabei stets die Solvatisierungskomponente S, welche weitgehend als Reaktionsmedium für die FK-Herstellung dient. Die Herstellung erfolgt bei RT bis 140 °C unter Inertgas und Feuchtigkeitsausschluss.

Beispielsweise trägt man dabei zunächst I in S ein. Im Falle, daß dazu aromatisches Monoisocyanat, z.B. Phenylisocyanat verwendet wird, führt man die Trimerisierungsreaktion zum Isocyanurat zunächst, durch Zugabe einer katalytischen Menge an Base, wie z.B. Natriummethylat, gezielt durch.

Begleitend zur anschließenden erfolgenden Zugabe von P ist eine starke Base, B, vorteilhafterweise in stöchiometrischem Anteil zu P mitzuverwenden.

Man kann direkt auch P, das bereits in die basische Form überführt ist, verwenden. Beispiele sind Alkoholate wie Methylat, oder auch Amide, wie z.B. das Na-Salz des Carbonsäureamids aus Isotridecylamin mit Essigsäure.

Es ist auch möglich, P vorteilhafterweise in stöchiometrischem Anteil dem I, das bereits trimerisiert sein kann zuzufügen und danach über Zugabe einer Base, die ein niedersiedendes Neutralisationsprodukt bildet, die Deprotonierung des umgesetzten I durchführen. Hauptsächliches Beispiel einer Base, die ein flüchtiges Neutralisationsprodukt bildet, ist Natriummethylat, NaOMe, das als Feststoff oder als Lösung in Methanol verwendet werden kann.

Alternativ kann man auch ein höhermolekulares P in einem Anteil von S lösen und über Zugabe von B, wie z.B. NaOMe in die Salzform überführen, indem man den entstehenden Alkohol über Wärme- und Vakuumeinwirkung vollständig entfernt, und man das anionisch gestellte P sodann zur Lösung des trimerisierten I zufügt.

Dabei kann in einer Zwischenstufe der Reaktionsführung auch Trübung auftreten oder das Reaktionsprodukt zum Teil oder vollständig ausfallen, was insbesondere unterhalb von 100 °C auftreten kann. Nach erfolgtem Umsatz der Komponenten I, P und B in S geht jedoch der Niederschlag meist wieder in Lösung.

Dabei ist es selbstverständlich so, daß je nach anwendungsbezogen gewünschten FI-Eigenschaften aus den verfügbaren Solvatisierungsmitteln, Isocyanaten, protische Verbindung und Basen die an die Aufgabenstellung angepaßten Edukte ausgewählt werden müssen und auch das jeweilige Herstellverfahren den verwendeten Rohstoffen angepaßt werden muß.

Die Flüssiginitiatoren werden zur Polymerisation von Lactam in kontinuierlichem oder diskontinuierlichem Verfahren eingesetzt.

Der erfindungsgemäße, lactamfreie und lagerstabile FI kann der Reinlactamschmelze in einer Konzentration von ca. 0,3-10 Gew.-% zugefügt werden, wobei schon niedere Konzentrationen von 0,5-3,0 Gew.-% zu Polylactam mit hervorragenden Eigenschaften führen.

Speziell geeignet sind dabei Lactam-12 und Lactam-6 und deren Gemische, wobei Polylactam mit hervorragender Hydrolysestabilität und sehr guten mechanische Eigenschaften resultiert.

Der erfindungsgemäße FI, kann der Lactamschmelze z.B. Lactam 6 bei Temperaturen von 100 °C bis 200 °C kontinuierlich in definiertem Volumenanteil, z.B. über eine kontinuierlich arbeitende Mischeinheit der Fa. Dosiplast, FL 8496 Balzers oder auch mittels eines Staticmixers z.B. der Fa. Sulzer, Wintherthur zugefügt werden, wonach z.B. die Imprägnationsprozesse der Fasergebilde erfolgen, oder er kann der Lactamschmelze auch diskontinuierlich in definiertem Volumenanteil mit nachfolgendem, raschem Mischen zugefügt werden, wonach für die Formgebung genügend Zeit zur Verfügung steht.

Günstig ist, daß bereits ein geringer Volumenanteil von 1-10, insbesondere 1-3 Gew.-% genügt um eine vollständige Poylmerisation von Lactam in kurzer Zeit ablaufen zu lassen, wobei wegen der rasch ablaufenden Startreaktion bevorzugt kontinuierlich fördernde und mischende Maschinen, insbesondere Doppelwellenextruder mit Intensivmischteil insbesondere im Bereich der FK-Einspritzung, verwendet werden.

Der FI kann prinzipiell kontinuierlich oder auch diskontinuierlich angewendet werden. Diskontinuierliche Zugabe ist insbesondere bei Lactam-6 und einer Temperatur der Lactamschmelze von etwa 100 bis 180 °C anwendungsgeeignet; kontinuierliche Zugabe in kontinuierlichen Prozessen, insbesondere bei Lactam-12, bevorzugt im Polymerisationsprozeß auf dem Doppelwellenextruder (170-300 °C).

Über die Zugabemenge an FI, und dabei die Zahl der Starterteilchen, die man in die Volumeneinheit an Lactamschmelze einmischt, läßt sich die Zahl der wachsenden Polylactamketten pro Volumeneinheit und damit deren mittleres Molekulargewicht vorausbestimmen. Dies korreliert mit der Geschwindigkeit des Monomerumsatzes, also der Polymerisationsgeschwindigkeit, die auch temperaturabhängig ist. Durch Wahl der Art des FI, dessen Konzentration in der Lactamschmelze sowie der Temperaturführung bei der Polymerisation und der Verweilzeit können somit der Polymerisationsverlauf sowie die Polylactameigenschaften weitgehend vorausbestimmt werden.

Die erfindungsgemäßen FI-Typen können somit bevorzugt in kontinuierlichen Verfahren gezielt angewendet werden und führen zu Produkten mit einem interessanten Eigenschaftsprofil.

Insbesondere zeichnen sich die resultierenden Formkörper aus durch gute mechanische Grundwerte, insbesondere eine hohe Zähigkeit und Bruchfestigkeit, geringen Abrieb, gute Witterungsbeständigkeit und eine bisher nicht erreichte Beständigkeit gegen hydrolytischen Abbau.

Die Erfindung betrifft weiterhin ein Polymergranulat herstellbar durch kontinuierliche oder diskontinuierliche anionische Polymerisation von Lactam mit einem Flüssiginitiator wie vorstehend beschrieben (Patentansprüche 26 bis 30).

Das erfindungsgemäße Granulat wird bevorzugt aus Lactam-6 und/oder Lactam-12 hergestellt. Der Flüssiginitiator kann dabei in einer Konzentration von 0,3-10 Gew.-%, bevorzugt 0,5-3 Gew.-% eingesetzt werden. Die Verfahrensparameter zur Herstellung des Polymergranulats entsprechen dabei denen, wie vorstehend beim Verfahren beschrieben. Das Polymergranulat nach der Erfindung wird bevorzugt mit einem Doppelwellenextruder hergestellt.

Besonders hervorzuheben beim Polymergranulat ist die ausgezeichnete Lagerstabilität. Das Polymergranulat kann dann anschließend mit Formgebungswerkzeugen zu verschiedenen Produkten weiterverarbeitet werden. Beispielhaft ist hier die Herstellung von Rohren, Profilen, Folien, Fasern, Kabeln, Ummantelungen oder Filamenten, oder auch von Tauch- und Beschichtungsprozessen, z.B. von vorgeheizten Metall-Teilchen, wobei alle Verfahren bevorzugt unter Inertgas betrieben werden, zu nennen.

Die Lactampolymerisation über Verwendung von erfindungsgemäßem FI eignet sich auch zur direkten Herstellung von Formkörpern (Anspruch 31) in kontinuierlichen und diskontinuierlichen Verfahren wie z.B. dem Pultrusionsverfahren direkt zu Profilen oder langfaserverstärkten Granulaten, die anschliessend thermoplastisch, wie bei Langfasergranulaten üblich, insbesondere im Spritzgussverfahren, weiterverarbeitet werden können, und wobei die Fasern bevorzugt Glasfasern oder C-Fasern sind. Weitere Verfahren sind RTM-Prozesse, Monomergußverfahren, Schleuder- und Rotationsgußverfahren sowie die kontinuierliche Polymerisation auf einem Doppelwellenextruder zu Granulat oder auch mit anschließenden Formgebungswerkzeugen, z.B. zur Direktherstellung von Rohren, Profilen, Folien, Fasern, Kabeln, Ummantelungen oder Filamenten, oder auch von Tauch- und Beschichtungsprozessen; z.B. von vorgeheizten Metallteilen wobei bei allen Verfahren bevorzugt unter Intertgas gearbeitet wird.

Die Erfindung soll nun anhand von Beispielen näher erläutert werden.

Zu beachten ist, daß die Startreaktion und der anschließende Polymerisationsverlauf stark temperturabhängig sind. So können die Initiatoren bei LC-12 bevorzugt in Verfahren mit Zwangsmischung wie z.B. der direkten Polymerisation auf einem Doppelwellenextruder, bei LC-6 aber in einem breiten Bereich von diskontinuierlichen und kontinuierlichen Verfahren angewendet werden, weil LC-6 bereits unterhalb von 70 °C eine flüssige Phase bildet (LC-12 - 160 °C!).

Speziell geeignete Verfahren bei LC-6 sind damit z.B. der Monomerguß (wobei oft Füllstoffe zur Erhöhung der Dimensstabilität und Steifigkeit mitverwendet sind. Die nachfolgenden Beispiele erläutern die Erfindung.

### Beispiele

Den Beispielen voran geht eine Tabelle mit den verwendeten Abkürzungen, welche ergänzend die Molekulargewichte oder bei bifunktionellen protischen Mitteln deren Äquivalentgewicht enthält.

Die Beispiele sind anschliessend in Tabellenform zusammengefasst, wobei jeweils das Vorgehen bei einer Serie gleichartiger Versuche genauer beschrieben ist und jeweils Teil a) die stöchiometrische Zusammensetzung des Flüssigkatalysators und Teil b) die Polymerisationsbedingungen und die Analysenergebnisse von Polymerisationsversuchen zusammengefasst.

In den Tabellen a) bedeuten
1 das Isocyanat
2 das protische Mittel P, wobei zu berücksichtigen ist, dass in einem Beispiel oft mehrere P-Mittel gleichzeitig verwendet wurden
3 die Base, B, welche in bevorzugten Fällen (Bsp. Na.OMe, Na.OEt) auch direkt als P-Mittel dienen kann
4 das Solvatisierungsmittel, S, wobei auch hier mehrere Solvatisierungsmittel gleichzeitig verwendet werden können
5 das Äquivalentverhältnis der verwendeten Komponenten.
   Sind gleichzeitig mehrere P-Mittel bzw. S-Mittel verwendet, so sind ihre Äquivalentanteile untereinander aufgeführt
6 je den Feststoffanteil des Ansatzes bestehend aus Isocyanat I, P-Mittel und zugehörigem Kation, z.B. Natrium
7 die Konzentration der aktiven Komponente, A, des FI, je berechnet als Äquivalent der -NCO-Funktion pro kg der gesamten FI-Rezeptur
   In Tabelle b) welche Polymerisationsversuche beinhaltet, bedeuten:
8 den Gewichtsanteil an FI
9 die Anzahl Lactammoleküle pro aktives FI-Teilchen
10 die Temperatur der Lactamschmelze während des Polymerisationsverlaufs
11 die gewählte Polymerisationszeit
12 die gewählte Lactammenge
13 die Zeit nach der ein die Schmelze kontinuierlich mischender Magnetrührer (übliche Bauart), zufolge der ansteigenden Viskosität der polymersisierenden Schmelze stehen bleibt
14 die relative Lösungsviskosität des Polymerisates
15 das Schmelzpunktmaximum des Polymerisates aus der DSC-Messkurve in °C
16 der Methonolextraktanteil des Produktes bestehend aus nicht umgesetztem Lactam sowie S- und freigesetztem P-Mittel.

### Beispiele

In den Beispielen bedeuten:

| bei den Solvatisierungsmitteln, S: | | Äquivalentgewichte |
|---|---|---|
| NMP | N-Methylpyrrolidon | 99 |
| NOP | N-Octylpyrrolidon | 197 |
| NOC | N-Octylcaprolactam | 225 |
| DMEU | Dimethylethylenharnstoff | 114 |
| DMPU | Dimethylpropylenharnstoff | 128 |
| | | |

| bei den Isocyanaten | | |
|---|---|---|
| PI | Phenylisocyanat | 119 |
| PCLPI | p-Chlorphenylisocyanat | 154 |
| 3.4-DiCLPI | 3.4-Dichlorphenylisocyanat | 188 |
| mMEPI | m-Tolylisocyanat | 133 |
| W | Methylen-bis(4-isocyanatocyclohexan) | 131 |
| CHI | Cyclohexylisocyanat | 125 |
| BI | Butylisocyanat | 99 |
| TPI | Tripropylisocyanurat | 85 |
| | | |

| Bei den protischen Mitteln P | | |
|---|---|---|
| PTHF250 | Aminterminiertes Polytetrahydrofuran | 125 |
| AeD, 3.0 | 4.7.10 Trioxatridecan-1.13-diamin | 110 |
| DMPACM | 3,3' Dimethyl-4,4'diaminodicyclohexylmethan | 119 |
| ITRA | Isotridecylamin | 199 |
| EtOH | Äthylalkohol | 46 |
| PrOH | Propylalkohol | 60 |
| BuOH | 1-Butanol | 74 |
| BuOH.2 | 2-Butanol | 74 |
| BzA | Benzylalkohol | 108 |
| Oct-1; Oct-3 | Octanol-1;Octanol-3 | 130 |
| T770 | Tinuvin 770* | 240 |
| T312 | Tinuvin 312* | 312 |
| T571 | Tinuvin 571 | 394 |
| 15057 | lrganox 5057* | 393 |
| Ny | Nylostab S-EED** | 221 |
| | | |

| Bei Carbonsäureamiden als P-Mittel | | |
|---|---|---|
| Bz. AeD3.O | | 214 |
| Bz AeD3.O | | 241 |
| Ac.ITRA | | |
| Bz. ITRA | | 303 |
| Et.hs.HMD | | 184 |
| Capr.AeD3.O | | 208 |
| Pel.HMD | | 198 |
| Ac.HMD | | 100 |

Es handelt sich stets um die vollständigen Amidierungsprodukte, wobei bedeuten:

| | | |
|---|---|---|
| Bz | = Benzoesäure, | AC = Essigsäure, |
| Et.hs | = 2-Äthyl-hexansäure | |
| Capr | = Capronsäure Pel. | = Pelargonsäure |
| AeD, 3.0 | = 4.7.10.-Trioxatridecan-1.13-diamin, | |
| ITRA | = Isotridecylamin | |
| HMD | = 1,6 Diaminohexan | |

Bei den Basen B (die auch als Verkappungsmittel wirken können)

| | | |
|---|---|---|
| NaOMe | Natriumethylat | 54 |
| NaH | Natriumhydrid | 24 |
| Na-M | Metallisches Natrium | 23 |
| NaOEt | Natriummethylat | 68 |
| * Handelsprodukte der Firma Ciba SC, Basel | | |
| ** Handelsprodukt der Firma Clariant, Basel | | |

### Beispiele 1 bis 5

Beispiel 1 bis 5 beschreibt die Herstellung und Anwendung von Flüssiginitiatoren, FI, für die Polymerisation von Lactam, insbesondere von Lactam-12 auf der Basis unterschiedlicher Isocyanate. Dabei hat sich gezeigt, dass aromatisches Isocyanat, wie z.B. Phenylisocyanat, gelöst in einem Solvatisierungsmittel, beim Basischstellen eine Trimerisierungsreaktion zum Isocyanurat durchläuft.

Im Versuchsblock zu Tabelle 1 wurde die Synthese daher stets so gesteuert, dass als erste Synthesestufe die Trimerisierungsreaktion von Monoisocyanat zum Isocyanurat direkt im Solvatisierungsmittel abläuft und man danach als protisches Mittel und Base das Natriummethylat, gelöst in Methanol oder auch direkt als Feststoff zufügt.

Als allgemeine Herstellvorschrift wurde folgendes Vorgehen gewählt, wobei unter trockenem Stickstoff gearbeitet wurde und sämtliche Einsatzstoffe bestmöglich von Restfeuchte befreit wurden:

Das Solvatisierungsmittel S wird mit 2% des Basenanteils versehen und auf ca. 80°C vorgewärmt. Danach wird portionenweise das Isocyanat, zugefügt, und die Zugabe so gesteuert, dass die Temperatur der Reaktionsmasse nicht über 110°C ansteigt. Wegen der relativ hohen Wärmetönung der Trimerisierungsreaktion muss dieser Reaktionsschritt stets sorgfältig kontrolliert werden. Nach Beendigung der Isocyanuratbildung, die z.B. über die IR-Spektroskopie verfolgt werden kann und nach ca. 1h beendet ist, lässt man die Reaktionslösung auf ca. 80°C abkühlen und tropft sodann das Natriummethylat als ca. 30%-tige Lösung in Methanol bei einer Temperatur der Reaktionsmischung von ca. 80°C zu, während man das Methanol kontinuierlich unter Vakuumeinwirkung abzieht. Nach Beendigung der Methylatzugabe verstärkt man das Vakuum von zunächst ca. 200 auf ca. 50 Torr und hält es solange aufrecht bis das Restmethanol vollständig entfernt ist, was nach jeweils 30 Minuten der Fall ist. Man erhält jeweils klare Lösungen des FI in S, welche eine meist rötliche Eigenfarbe besitzen.

Diese Flüssiginitiatoren sind in Tabelle 1a) zusammengefasst. Die zugehörigen Polymerisationsversuche sind in Tabelle 1b enthalten. Als allgemeine Polymerisationsvorschrift gilt: Lactam-12 wird in einem Erlenmeyerkolben unter trockenem Stickstoff aufgeschmolzen, und die Schmelze mit einem Magnetrührer gerührt. Nachdem die Lactamschmelze 10 Minuten bei der Polymerisationstemperatur gehalten wurde, wird der FI mit einer Flüssigdosiereinheit rasch zugefügt und danach die Zeit gemessen bis die Kraft des Rührerantriebs nicht mehr genügt um den Magnetrührer in Rotation zu halten; danach wird der Rührer rasch entfernt.

Diese für den jeweiligen FI charakteristische Zeit, als Tᵤ bezeichnet, ist in der Tabelle in Kolonne 13 eingetragen. Danach wird ohne Rühren zu Ende polymerisiert, das Polymerisat, das als Scheibe vorliegt, entnommen und sodann an Bohrspähnen, je nach Ziel und Bedarf, die relative Lösungsviskosität an einer 0,5 prozentigen Lösung in Metakresol gemessen, das Schmelzpunktmaximum mittels der DSC-Methode bestimmt oder die Probe mit Methanol extrahiert und der Extraktionsrückstand grafimetrisch bestimmt.

Die in der Tabelle zusammengefassten Ergebnisse und ergänzende Lagerversuche zeigen, dass mit allen verwendeten Isocyanaten stabile FI-Typen hergestellt werden konnten, welche die Polymerisation mit unterschiedlicher Zeitverzögerung auslösen, was durch die unterschiedlichen Tᵤ-Zeiten und die übrigen Analyseergebnisse belegt wird.

### Beispiele 6 bis 17

Tabelle 2 zeigt mit den Beispielen 6 bis 17 Flüssiginitiatoren, basierend auf Phenylisocyanat mit verschiedenen protischen Mitteln, wobei wieder Tabelle 2a) das stöchiometrische Verhältnis der Ausgangsstoffe und Tabelle 2b) die Polymerisationsbedingungen und die Analyseergebnisse umfasst.
Für die gesamte Versuchsreihe wurde aromatisches Isocyanat, (Phenylisocyanat), in der trimerisierten Isocyanuratform im P-Mittel, insbesondere NMP (Lösung a) verwendet, und parallel dazu die P-Mittel in einem ergänzenden Anteil an S-Mittel gelöst und mit der Base NaOMe in ihre Salzform überführt. Stöchimetrische Anteile von a) wurden sodann mit deprotoniertem, solvatisiertem P-Mittel in S so vereinigt und zur Nachreaktion gebracht, dass FI mit Stöchiometrie gemäss Tabelle 2a) resultiert.

Zur Herstellung von Lösung a) wurde wie folgt vorgegegangen. In 693 g NMP wurden zwecks Basischstellen 4,75 g NaOMe gelöst und die Lösung auf 80°C erwärmt. Sodann wurden 208g PI langsam innerhalb einer halben Stunde so zugetropft, dass die Temperatur der Lösung nicht über 110°C anstieg (positive Wärmetönung der Trimerisierungsreaktion) und sodann bei 80 - 100°C 0,5 h nachreagieren gelassen so dass alles PI in die Isocyanuratform überführt war. Die Reaktionsmischung wurde sodann in identische Portionen, enthaltend je 0,175 Mol trimerisiertes PI, aufgeteilt.

Wie die Kolonne zum Äquivalentverhältnis der Komponenten zeigt, wurden jeweils einheitlich 8 Moleküle S-Mittel verwendet, wovon 4 Moleküle NMP pro PI zur Herstellung von Lösung a) verwendet wurden und die verbleibenden 4-S-Moleküle, teils unterschiedlicher Art, für die Herstellung von P-Mittel in deprotonierter Form verwendet wurden. Dazu wurde das P-Mittel in S gelöst und die Lösung auf 80 - 100°C erwärmt. Sodann wurde bei dieser Temperatur NaOMe als 30%tige Lösung in Methanol langsam zugetropft und Methanol am Vakuum kontinierlich abgezogen, wobei sich ein Vakuum von ca. 200 Torr einstellt, das nach erfolgter, vollständiger NaOMe-Zugabe auf ca. 50 Torr sank und nachfolgend während ca. 30 Minuten aufrechterhalten wurde. Sodann wurde die auf 80°C vorerwärmte Reaktionsmischung a) mit der getrennt hergestellten Lösung von deprotoniertem P, in S vereinigt und ca. 10 Min. bei 80 - 100°C nachreagieren gelassen, und der gebildete FI sodann auf Raumtemperatur abgekühlt und für die Polymerisationsversuche verwendet.

Wie die Polymerisationsergebnisse der Versuche 6-13 zeigen, lösen diese Flüssigkatalysatoren die Polymerisation mit ausgeprägter Zeitverzögerung aus, wobei nach einer Gesamtpolymerisationszeit von 25 Minunten erst niederer Polymerisationsgrade (ηrel. Werte) und Schmelzpunkte bei relativ hohen Extraktwerten vorliegen.

In Versuch 14, 15, 16 und 17 sind als spezielle P-Mittel PA-Stabilisatoren mit Amid- sowie sterisch gehinderten Amin- und Phenolgruppen im Unterschuss zum PI und zur Base verwendet, weshalb direkt ein Teil der Base als P-Mittel verbleibt.

Die beim Stadardpolymerisationsversuch anfallenden Analyseergebnisse belegen wieder ein praxisgeeignetes Verhalten dieser Flüssiginitiatoren.

### Beispiele 18 bis 20 (Tabelle 3)

In diesen Beispielen wurde Äthanol, Propanol sowie Butanol, je in NMP, direkt nach üblicher Verfahrensweise mit NaH zum Alkoholat umgesetzt und wieder mit einem äquivalenten Molanteil an Lösung a) (trimerisiertes PI in NMP) zum FK umgesetzt. Das Molverhältnis der Komponenten ist in Tab 3 a) und die Ergebnisse der Polymerisationsversuche in Tabelle 3 b) enthalten.

Ähnlich zu den Beispielen 1 bis 5, wo jeweils direkt NaOMe als P-Mittel diente, findet man bei diesen kurzkettigen Alkoholen relativ kurze Tᵤ-Zeiten bei hohen ηrel-Werten.

### Beispiele 21 bis 30 (Tabelle 4)

Bei Versuch 21 bis 30 wurden lineare Carbonsäureamide als P-Mittel eingesetzt. Sie wurden nach üblichem Verfahren durch Wasserabspaltung aus dem freien Amin und der freien Säure hergestellt. Ergänzend ist im Versuch 29 Nylostab S-EED® als Carbonsäureamid verwendet.

Als Acylierungskomponente im FI wurde einerseits wieder separat hergestelltes, trimerisiertes Phenylisocyanat verwendet (Lösung a); siehe Beispiele 6 - 17) sowie in den Versuchen 27 - 29 direkt das aliphatische Cyclohexylisocyanat und in Versuch 29 das aliphatische Dicyclohexyldiisocyanat eingesetzt.

Zur Bereitstellung der einzelnen Versuchsmuster wurde je das entsprechende Carbonsäureamid in S, entsprechend Vs 6 - 17, mit NaOMe zum Na Salz deprotoniert und die beiden Lösungen danach bei 80 - 100 °C vereinigt.

Die resultierenden Flüssiginitiatoren zeigen insgesamt ein gutes Verhalten bezüglich Auslösung und Ablauf der Polymerisation von Lactam-12. Dies könnte darauf zurückzuführen sein, dass lineares Carbonsäureamid in etwa dieselbe Acidität bezüglich des eliminierbaren H-Atoms besitzt wie die Lactame.

### Versuche 31 bis 34

Tabelle 5 fasst Ergebnisse mit aliphatischen Monoisocyanaten, welche ohne Verwendung von P-Mitteln direkt mit NaOMe umgesetzt sind zusammen. Dabei wurden zum Teil verschiedene Synthesewege wie folgt beschritten:

Bei Versuch 31 und 32 wurde das Isocyanat im DMPU, das 3 % der gesamten Menge an NaOMe bereits enthielt, bei 80 °C gelöst und zwecks vollständigem Ablauf der Trimerisierungsreaktion 1h bei 80 °C belassen. Danach wurde nach beschriebener Methode das Natriummethylat als methanolische Lösung zugefügt und danach der Methylalkohol entfernt.

Bei Versuch 33, wo TPI bereits die Isocyanuratform abgeleitet von Propylisocyanat darstellt, wurde das TPI im Solvatisierungsmittel bei 80 °C gelöst und direkt anschliessend nach üblicher Methode methanolisches NaOMe zugefügt und der Alkohol entfernt, wonach der Flüssiginitiator vorlag.

In Versuch 34 wurde Flüssiginitiator,Basis CHI, ergänzend nach einer anderen Verfahrensweise hergestellt: dazu wurde bei 100 °C die Gesamtmenge an NaOMe in den DMPU-Anteil eingebracht und Restmethanol vollständig entfernt (Lösung a). Separat wurde Cyclohexylisocyanat, CHI, in NOP bei 80 °C gelöst und sodann unter Rühren in Lösung a) eingetragen und bis zum Klarwerden der Reaktionsmischung gerührt, sodann auf Raumtemperatur abgekühlt.

### Versuch 35

Ergänzend wurde geprüft ob sich im erfindungsgemässen FI ein Teil des isocyanats I, durch Carbodiimid ersetzen lässt.

Dazu wurde in einem Reaktionsansatz von 30g Feststoffanteil PI und Dicyclohexylcarbodiimid DCC im Molverhältniss von 60:40 eingesetzt, als protisches Mittel, P, Nylostab S-EED zu 0,8 mitverwendet mit 1,02 NaOMe (je Äquivalentteile bezogen auf PI + DCC) umgesetzt, wobei die Reaktion im S-Mittel mit 4 DMPU und 3 NMP (je Molteile bezogen auf die Summe PI + DCC) durchgeführt wurde.

Dazu löste man Ny in S, erwärmte auf 100°, fügte danach NaOMe als 30 %ige Lösung in MeOH zu und danach tropfenweise das PI. Nachfolgend wurde während 30 Min. bei 100° Vakuum angelegt, sodann bei 100° das DCC zugefügt, während weiteren 10 Min. bei 100° belassen und danach abgekühlt.

Es resultierte ein FI ohne Feststoffanteil, der im Polymerisationstest unter Bedingungen wie in Tabelle 1b beschrieben, eine Zeit tᵤ von 26 Sek. bewirkt, und zu Polylactam-12 mit einem SMP von 176 °C bei einer Lösungsviskosität von 1.849 führte.

Ergänzend wurden mit den beschriebenen Flüssiginitiatoren viele Anwendungsversuche durchgeführt.

Dabei zeigte sich als allgemeine Regel, dass sich bei Lactam-12 die Polymerisation durch Temperaturenerhöhung stark beschleunigen lässt.

Setzt man dabei einen FI, mit dem man bei 200 °C und 30 Minuten ein ηrel. von mindestens 1.8 erreicht, so ein, dass seine Anwendungskonzentration 0.5 Äquiv.-%, bezogen auf die Lactam-12 Konzentration, beträgt (1 FI-Teilchen auf 200 Lactammoleküle), so genügt bei 250 °C eine Zeit von ca. 5 Minuten und bei 300 °C von lediglich ca. 1 Minute für den weitgehenden Umsatz des Lactams zum Polylactam (Restlactamgehalt 0,5 - 1.0 Gew.-%). Wird diese Temperatur länger aufrecht erhalten, so kommt es, insbesondere bei hohen Temperaturen, zu Nebenraktionen, wobei die aus der Literatur bekannten Vernetzungsstrukturen dominant werden können, und damit einerseits die Festigkeit und Zähigkeit ansteigt, andererseits die Weiterverarbeitbarkeit erschwert wird.

Zusätzlich wurde auch Lactam-6 mit FI gemäss Versuch 1, 16 und 17 und einer Zugabemenge an FI entsprechend 0.5 Äquiv.-% bezogen auf Lactam-6 zum Polylactam umgesetzt.

Das Lactam wurde dazu sorgfältig getrocknet. Die Polymerisation erfolgte identisch zu den Bedingungen bei Lactam-12, d.h. während 30 Minuten bei 200 °C. Die Produkte von Versuch 1 resp. 16 und 17 besitzen Restlactamgehalte von 6.6, 8.9 und 9.3 Gew.-% sowie SMP-Maxima im DSC von ca. 215 °C und zeigen spontanes Ablösen von der Gefässwand.

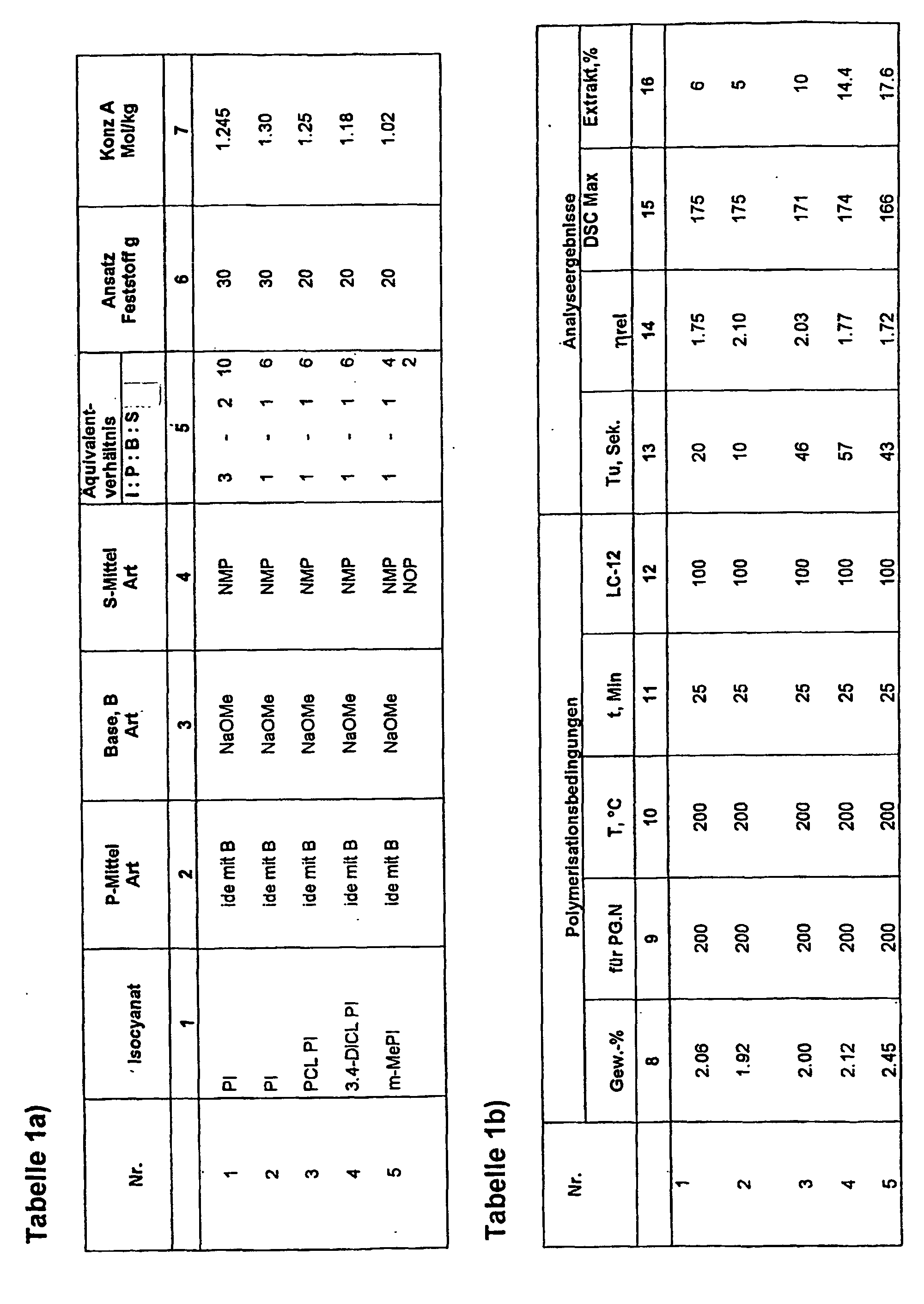

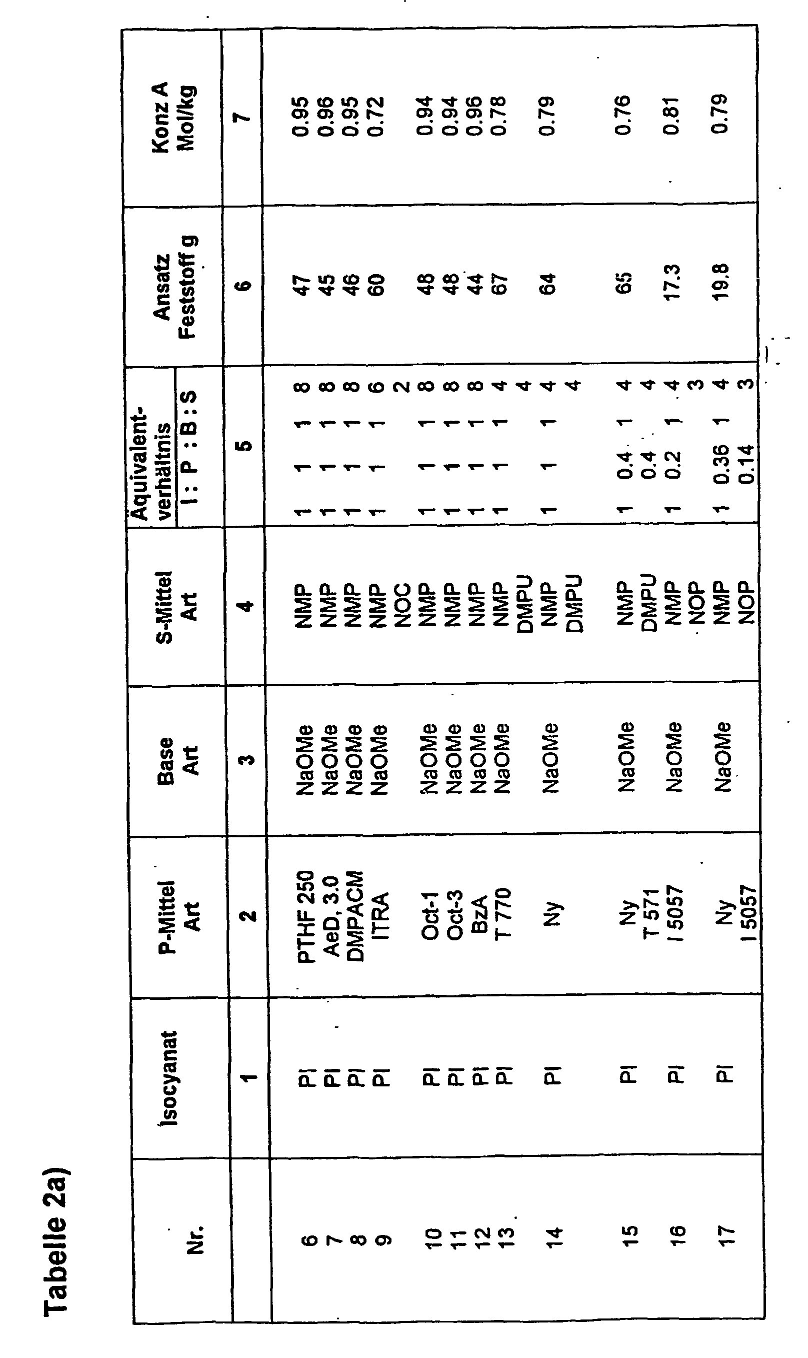

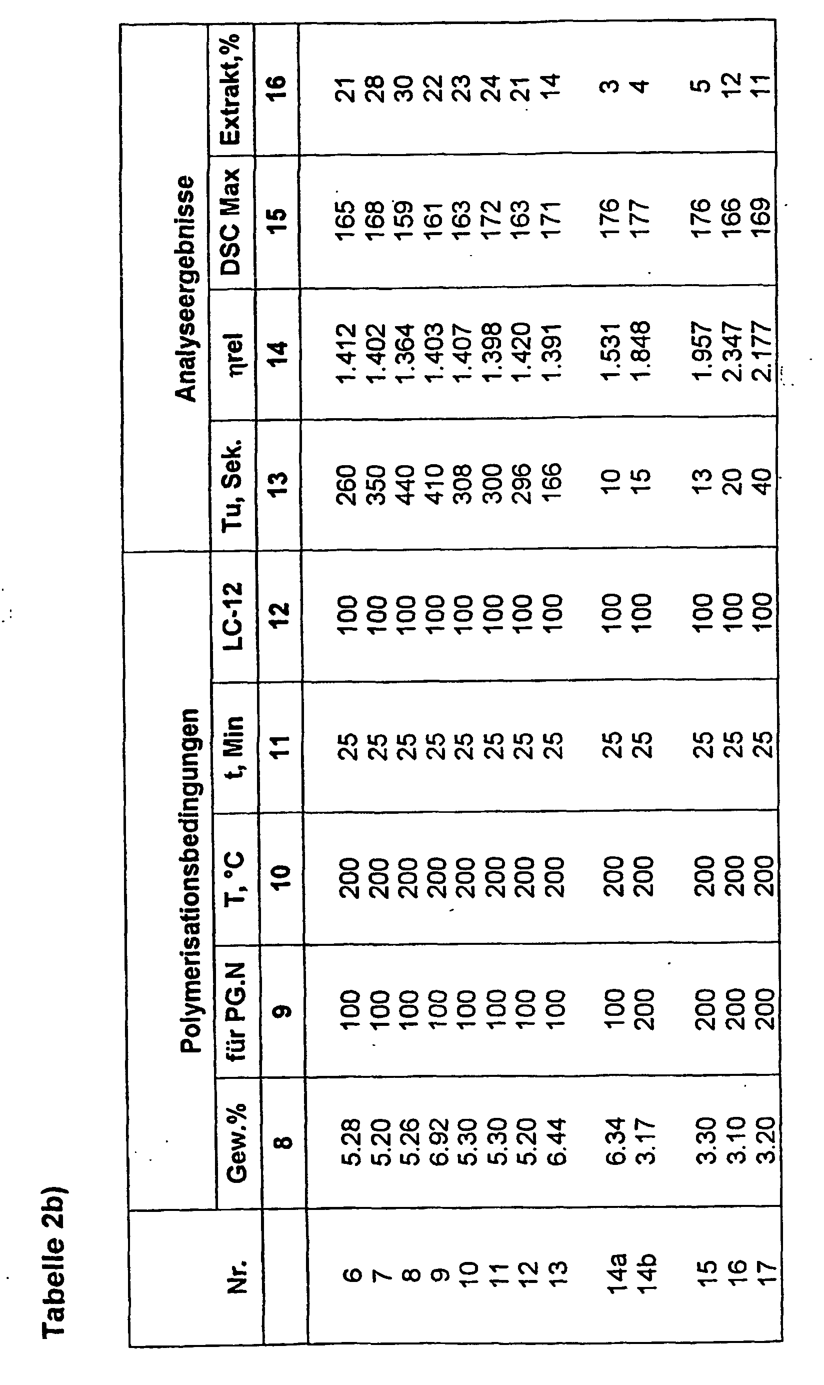

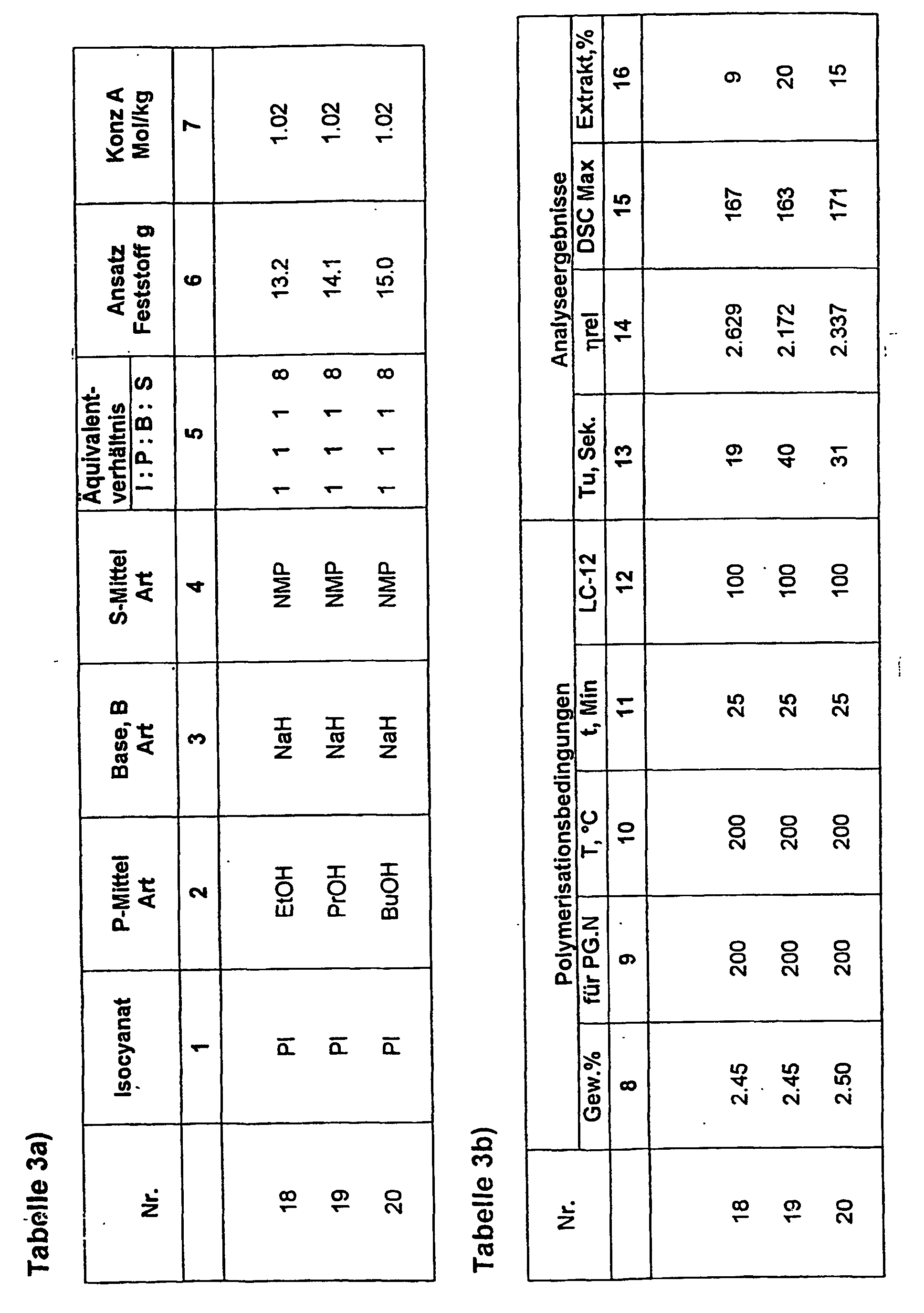

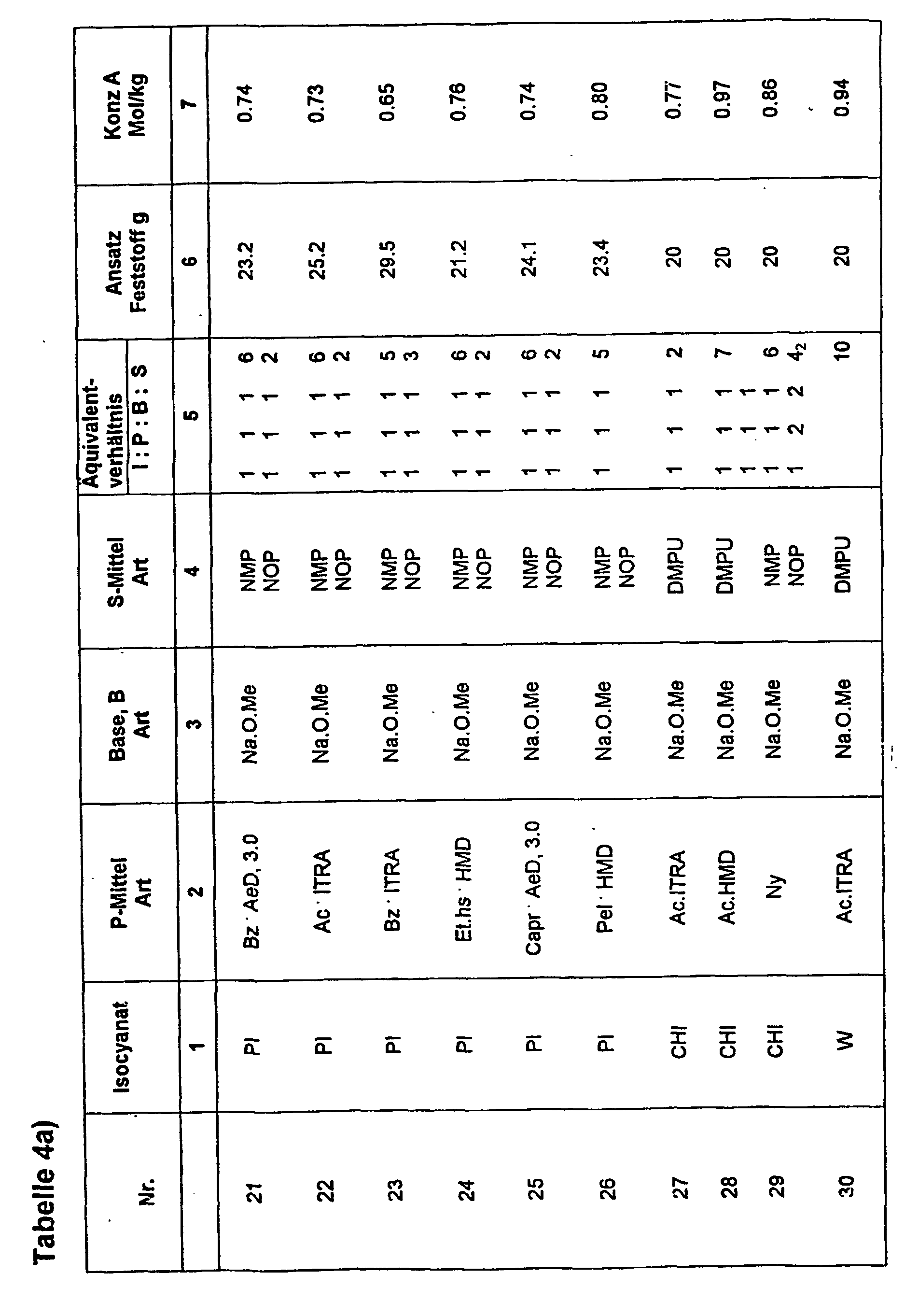

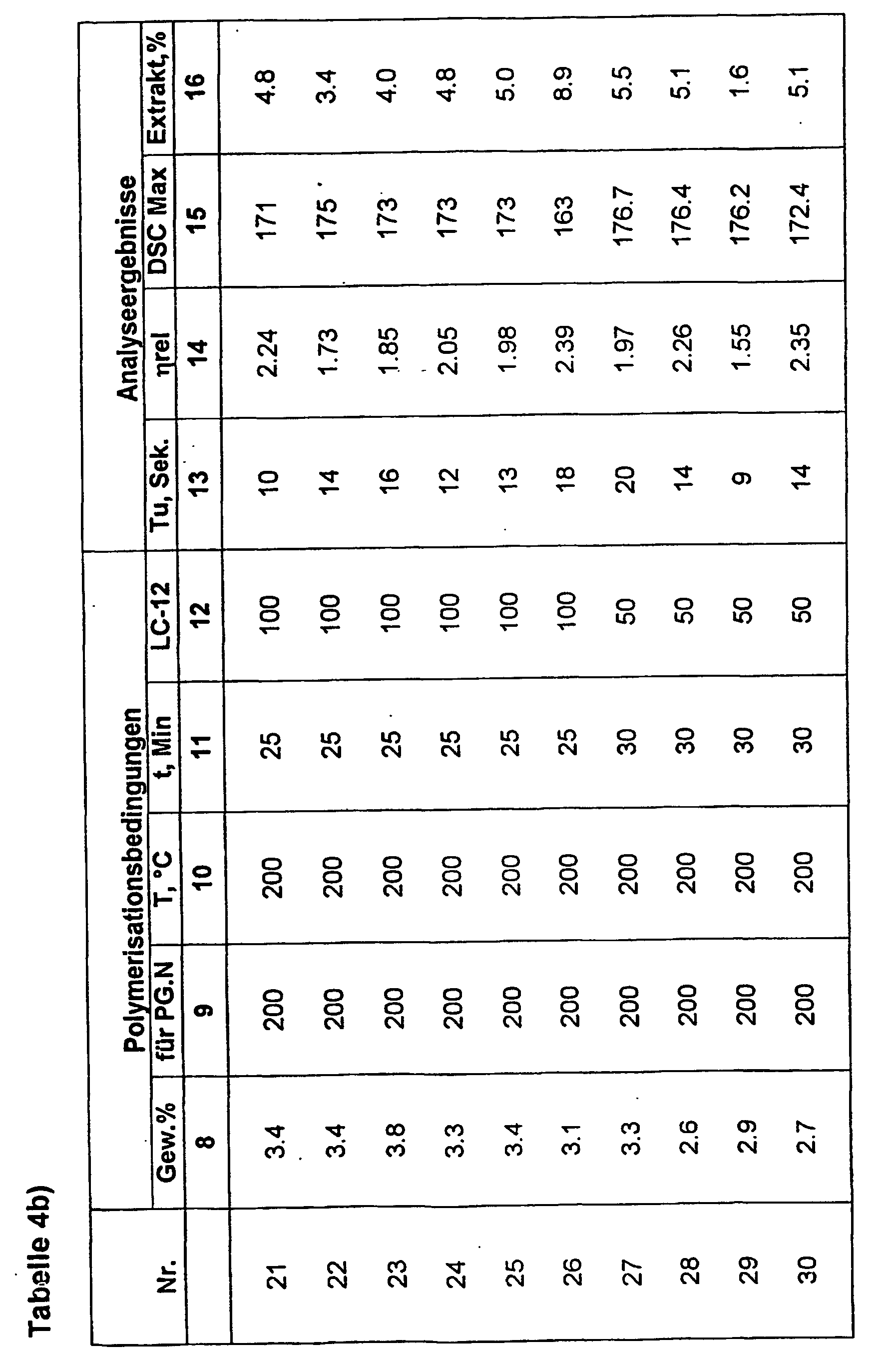

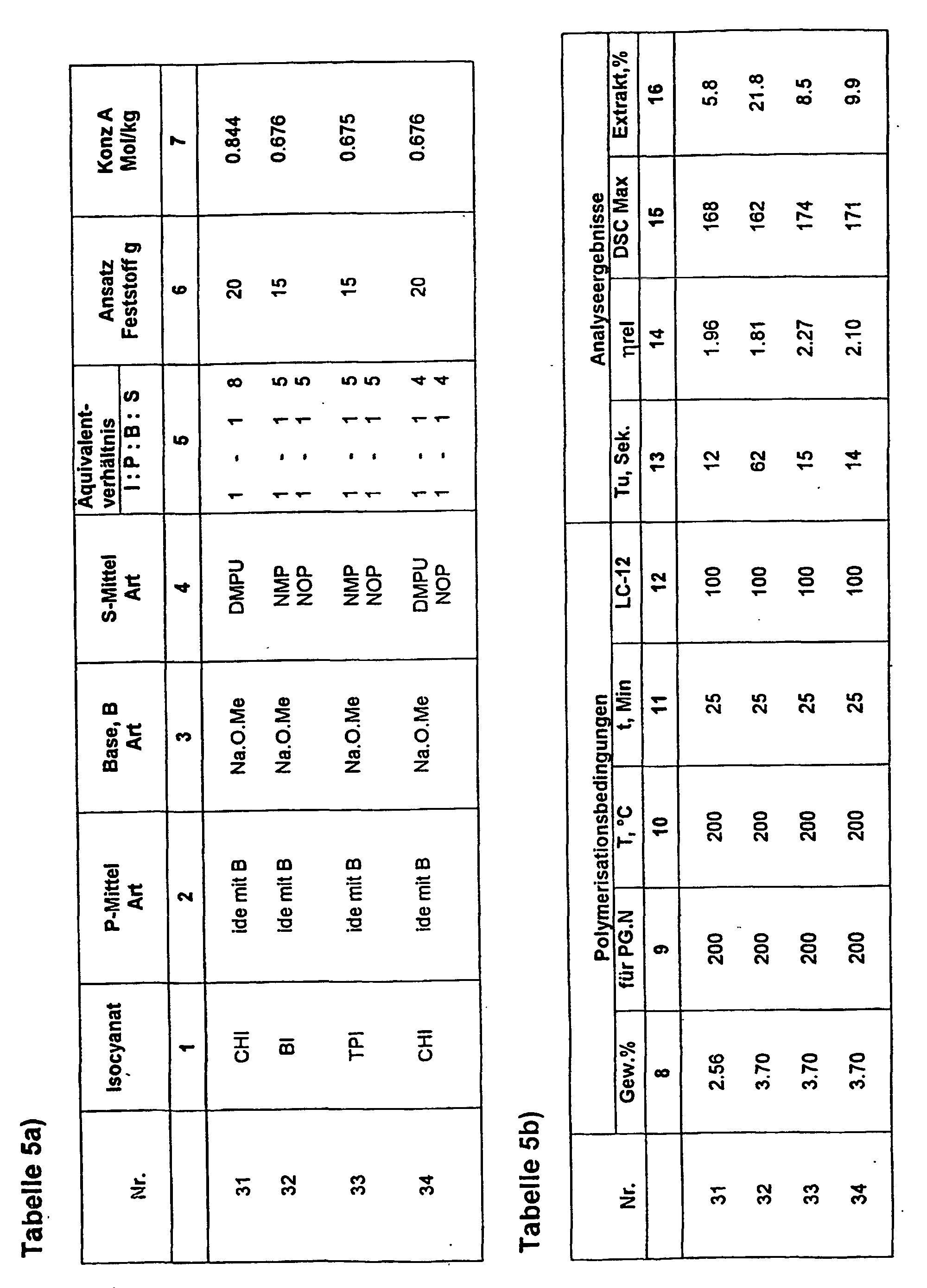

## Patentansprüche

1. Flüssiginitiator für die Durchführung der anionischen Lactampolymerisation,
**dadurch gekennzeichnet, daß**
er ein Umsetzungsprodukt von Isocyanat I mit einer protischen Verbindung P die ausgewählt ist aus Alkoholen mit 1 bis 5 C-Atomen, Carbonsäureamiden, und/oder sterisch gehinderten aliphatischen Aminen und einer Base B in einem aprotischen Solvatisierungsmittel S enthält.

2. Flüssiginitiator nach Anspruch 1, **dadurch gekennzeichnet, daß** das Isocyanat eine aliphatische, cycloaliphatische, aromatische oder aliphatisch-aromatische Grundstruktur besitzt.

3. Flüssiginitiator nach Anspruch 2, **dadurch gekennzeichnet, daß** das I ausgewählt ist aus Phenylisocyanat und substituierten Phenylisocyanaten, Cyclohexylisocyanat, Toluylendiisocyanat, Isophorondiisocyanat, Diphenylmethandiisocyanat, Dicyclohexylmethandiisocyanat und Hexamethylendiisocyanat oder Mischungen hiervon.

4. Flüssiginitiator nach Anspruch 2 oder 3, **dadurch gekennzeichnet, daß** die Isocyanate vollständig oder teilweise in cyclisierter Form vorliegen.

5. Flüssiginitiator nach mindestens einem der Ansprüche 1 bis 4, **dadurch gekennzeichnet, daß** er ein Umsetzungsprodukt enthält bei dem das Isocyanat durch 1-50 Äquivalentprozent Carbodiimid ersetzt worden ist.

6. Flüssiginitiator nach mindestens einem der Ansprüche 1 bis 5, **dadurch gekennzeichnet, daß** die protische Verbindung P eine pk_{A} > 13 aufweist und ggf. in deprotonierter Form vorliegt.

7. Flüssiginitiator nach Anspruch 6, **dadurch gekennzeichnet, daß** die Carbonsäureamide aus linearen und/oder cyclischen Monomeren mit 2-20 C-Atomen aufgebaut sind.

8. Flüssiginitiator nach mindestens einem der Ansprüche 1 bis 7, **dadurch gekennzeichnet, daß** das Kation der Base B ein Alkali- oder Erdalkaliion oder Tetraalkylammonium ist und die Base ausgewählt ist aus Alkoholat, Amid, Hydrid oder Alkylanion.

9. Flüssiginitiator nach Anspruch 8, **dadurch gekennzeichnet, daß** die Base B ein Alkali- oder Erdalkalialkoholat ist.

10. Flüssiginitiator nach mindestens einem der Ansprüche 1 bis 9, **dadurch gekennzeichnet, daß** das S eine aliphatische, cycloaliphatische oder aromatische organische Verbindung ist, die solvatisierende Strukturelemente besitzt, die keine aziden H-Atome aufweisen.

11. Flüssiginitiatoren nach Anspruch 10, **dadurch gekennzeichnet, daß** S eine polare aprotische Verbindung ausgewählt aus der Gruppe veretherte Polyglykole, flüssige Phthalsäureester, N-alkylierte Harnstoff-Verbindungen, N-alkylierte Carbonsäureamide oder deren Gemische ist.

12. Flüssiginitiator nach Anspruch 11, **dadurch gekennzeichnet, daß** die Harnstoffverbindung ein Tetraalkylharnstoff mit 1-12 C-Atomen ist, insbesondere ausgewählt aus der Gruppe Tetramethylharnstoff, Tetraethylharnstoff, Tetrabutylharnstoff oder eine cyclische Struktur gemäß der allgemeinen Formel I 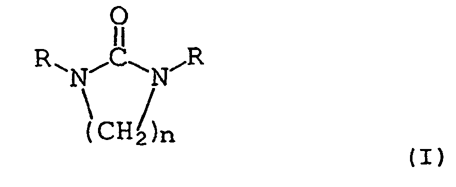 in welcher R ein Alkylrest mit 1-5 C-Atomen, insbesondere ein Methylrest ist und wobei n 2 oder 3 ist.

13. Flüssiginitiator nach Anspruch 11, **dadurch gekennzeichnet, daß** S ein cyclisches 5-7 gliedriges N-alkyliertes Carbonsäureamid ist und der Alkyrest 1-12 C-Atome besitzt, wobei auch Heteroatome enthalten sein können.

14. Flüssiginitiator nach Anspruch 11, **dadurch gekennzeichnet, daß** S N-Methylpyrrolidon, N-Octylpyrrolidon, N Cyclohexylpyrrolidon, N-Octylcaprolactam oder ein Gemisch hiervon ist.

15. Flüssiginitiator nach Anspruch 11, **dadurch gekennzeichnet, daß** das Solvatisierungsmittel ein Gemisch aus Harnstoffderivat und Säureamid ist.

16. Flüssiginitiator nach mindestens einem der Ansprüche 1 bis 15, **dadurch gekennzeichnet, daß** er zusätzlich herstellungs- und/oder verwendungsbedingte Zusätze enthält.

17. Flüssiginitiator nach mindestens einem der Ansprüche 1 bis 16, **dadurch gekennzeichnet, daß** das Umsetzungsprodukt erhalten worden ist mit der Maßgabe, daß B:P:I im Verhältnis von 0,2-1,1:0,2-4:1 eingesetzt worden ist.

18. Flüssiginitiator nach Anspruch 17, **dadurch gekennzeichnet, daß** das Molverhältnis B:P:I 0,8-1,1:0,8-1,2:1 ist.

19. Verfahren zur Herstellung eines Flüssiginitators nach mindestens einem der Ansprüche 1 bis 18, **dadurch gekennzeichnet, daß** das Umsetzungsprodukt im Solvatisierungsmittel S unter Inertgas und Feuchtigkeitsausschluß bei Raumtemperatur bis 140 °C hergestellt wird, wobei niedermolekulare Lösemittel für die Base und Neutralisationsprodukte der Base, insbesondere niedermolekulare Alkohole entfernt werden.

20. Verfahren nach Anspruch 19, **dadurch gekennzeichnet, daß** in einem vorgelagerten Schritt die protische Verbindung P mit der Base B umgesetzt wird, so daß P in basischer Form vorliegt und so dann die deprotonisierte Verbindung P in der basischen Form dem im Solvatisierungsmittel S gelösten Isocyanat zugegeben wird.

21. Verfahren nach Anspruch 19 oder 20, **dadurch gekennzeichnet, daß** in einem vorgelagerten Verfahrensschritt das Isocyanat einer Cyclisierung zum Isocyanurat unterzogen und dann anschließend die Reaktionsstufe mit stöchiometrischer Bäsenzugabe fortgeführt wird.

22. Verfahren nach mindestens einem der Ansprüche 19 bis 21, **dadurch gekennzeichnet, daß** man getrennt in einem Anteil Solvatisierungsmittel S P löst und P über Basezugabe B in die anionische Salzform überführt und flüchtige Reaktionsprodukte sowie die Polymerisation behindernde Löse- und Solvatisierungsmittelbestandteile entfernt und daß man danach das Isocyanat im Solvatisierungsmittel S und die deprotonierte Verbindung gelöst im Solvatisierungsmittel S zusammenfügt und zum Flüssiginitiator umsetzt.

23. Verfahren nach Anspruch 19, **dadurch gekennzeichnet, daß** man das Isocyanat I mit der protischen Verbindung P umsetzt und dieses verkappte Isocyanat anschließend mit Hilfe einer Base deprotoniert und so zum FI umsetzt.

24. Verfahren nach Anspruch 22 oder 23, **dadurch gekennzeichnet, daß** das Isocyanat bevorzugt in der trimerisierten Form eingesetzt wird.

25. Polymergranulat herstellbar durch kontinuierliche oder diskontinuierliche anionische Polymerisation von Lactam mit einem Flüssiginitiator nach mindestens einem der Ansprüche 1 bis 18.

26. Polymergranulat nach Anspruch 25, **dadurch gekennzeichnet, daß** als Lactam Lactam-6 und/oder Lactam-12 verwendet worden ist.

27. Polymergranulat nach Anspruch 25 oder 26, **dadurch gekennzeichnet, daß** der Lactamschmelze der Flüssiginitiator in einer Konzentration von 0,3-10 Gew.-% zugefügt worden ist.

28. Polymergranulat nach Anspruch 27, **dadurch gekennzeichnet, daß** eine Konzentration von 0,5-3 Gew.-% eingestellt worden ist.

29. Polymergranulat nach mindestens einem der Ansprüche 25 bis 28, **dadurch gekennzeichnet, daß** das Polymergranulat kontinuierlich auf einem Doppelwellenextruder hergestellt worden ist.

30. Verwendung des Flüssiginitiators nach einem der Ansprüche 1 oder 18, zur direkten Herstellung von Gebrauchsgegenständen aus Polylactam in einem diskontinuierlichen oder kontinuierlichen Prozess der Art Monomerguss, Extrusion, Schleuderguss, Spritzguss, Rotationsguss, Pultrusions-, Tauch- und Sprühverfahren, wobei der Flüssiginitiator jeweils der Lactamschmelze zugefügt ist.

## Claims

1. A liquid initiator for carrying out anionic lactam polymerisation,
**characterised in that** it contains a reaction product of isocyanate I with a protic compound P, which is selected from alcohols with 1 to 5 C atoms, carboxamides and/or sterically hindered aliphatic amines, and a base B in an aprotic solvating agent S.

2. The liquid initiator according to claim 1,
**characterised in that** the isocyanate possesses an aliphatic, cycloaliphatic, aromatic or aliphaticaromatic basic structure.

3. The liquid initiator according to claim 2,
**characterised in that** the I is selected from phenyl isocyanate and substituted phenyl isocyanates, cyclohexyl isocyanate, toluylene diisocyanate, isophorone diisocyanate, diphenylmethane diisocyanate, dicyclohexylmethane diisocyanate and hexamethylene diisocyanate or mixtures thereof.

4. The liquid initiator according to claim 2 or 3,
**characterised in that** the isocyanates are completely or partly present in cyclised form.

5. The liquid initiator according to at least one of claims 1 to 4, **characterised in that** it contains a reaction product in which the isocyanate has been replaced by 1-50 equivalent per cent carbodiimide.

6. The liquid initiator according to at least one of claims 1 to 5, **characterised in that** the protic compound P has a pk_{A} > 13 and is optionally present in deprotonated form.

7. The liquid initiator according to claim 6,
**characterised in that** the carboxamides are composed of linear and/or cyclic monomers with 2-20 C atoms.

8. The liquid initiator according to at least one of claims 1 to 7, **characterised in that** the cation of the base B is an alkali or alkaline earth ion or tetraalkylammonium and the base is selected from alcoholate, amide, hydride or alkyl anion.

9. The liquid initiator according to claim 8,
**characterised in that** the base B is an alkali or alkaline earth alcoholate.

10. The liquid initiator according to at least one of claims 1 to 9, **characterised in that** the S is an aliphatic, cycloaliphatic or aromatic organic compound, which possesses solvating structural elements having no acidic H atoms.

11. The liquid initiators according to claim 10,
**characterised in that** S is a polar aprotic compound selected from the group of etherified polyglycols, liquid phthalates, N-alkylated urea compounds, N-alkylated carboxamides or mixtures thereof.

12. The liquid initiator according to claim 11,
**characterised in that** the urea compound is a tetraalkylurea with 1-12 C atoms, particularly selected from the group of tetramethylurea, tetraethylurea, tetrabutylurea or a cyclic structure according to the general formula I 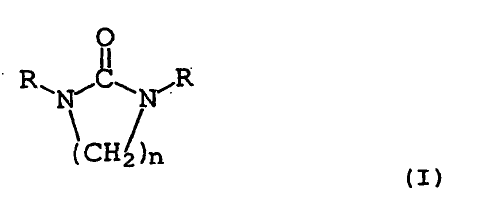 in which R is an alkyl radical with 1-5 C atoms, particularly a methyl radical, and wherein n is 2 or 3.

13. The liquid initiator according to claim 11,
**characterised in that** S is a cyclic, 5-7-membered, N-alkylated carboxamide and the alkyl radical possesses 1-12 C atoms, heteroatoms also optionally being contained.

14. The liquid initiator according to claim 11,
**characterised in that** S is N-methylpyrrolidone, N-octylpyrrolidone, N-cyclohexylpyrrolidone, N-octylcaprolactam or a mixture thereof.

15. The liquid initiator according to claim 11,
**characterised in that** the solvating agent is a mixture of urea derivative and acid amide.

16. The liquid initiator according to at least one of claims 1 to 15, **characterised in that** it additionally contains additives associated with its production and/or use.

17. The liquid initiator according to at least one of claims 1 to 16, **characterised in that** the reaction product has been obtained on the condition that B:P:I has been used in a ratio of 0.2-1.1:0.2-4:1.

18. The liquid initiator according to claim 17,
**characterised in that** the molar ratio B:P:I is 0.8-1.1:0.8-1.2:1.

19. A process for the production of a liquid initiator according to at least one of claims 1 to 18,
**characterised in that** the reaction product is produced in the solvating agent S under inert gas, with the exclusion of moisture, at room temperature to 140°C, with the removal of low-molecular-weight solvents for the base and neutralisation products of the base, particularly low-molecular-weight alcohols.

20. The process according to claim 19, **characterised in that**, in a previous step, the protic compound P is reacted with the base B so that P is present in basic form and the deprotonated compound P is then added in the basic form to the isocyanate dissolved in the solvating agent S.

21. The process according to claim 19 or 20,
**characterised in that**, in a previous process step, the isocyanate is subjected to cyclisation to form the isocyanurate and the reaction step is then continued with stoichiometric addition of base.

22. The process according to at least one of claims 19 to 21, **characterised in that** P is dissolved separately in a portion of solvating agent S and P is converted to the anionic salt form by adding base B, and volatile reaction products, together with solvent and solvating agent components inhibiting polymerisation, are removed, and that the isocyanate in the solvating agent S and the deprotonated compound dissolved in the solvating agent S are then brought together and converted to the liquid initiator.

23. The process according to claim 19, **characterised in that** the isocyanate I is reacted with the protic compound P and this capped isocyanate is then deprotonated with the aid of a base and thus converted to the liquid initiator.

24. The process according to claim 22 or 23,
**characterised in that** the isocyanate is preferably used in the trimerised form.

25. Polymer granules, which can be produced by continuous or discontinuous anionic polymerisation of lactam with a liquid initiator according to at least one of claims 1 to 18.

26. Polymer granules according to claim 25, **characterised in that** lactam-6 and/or lactam-12 has been used as the lactam.

27. Polymer granules according to claim 25 or 26,
**characterised in that** the liquid initiator has been added to the lactam melt in a concentration of 0.3-10 wt.%.

28. Polymer granules according to claim 27, **characterised in that** a concentration of 0.5-3 wt.% has been adjusted.

29. Polymer granules according to at least one of claims 25 to 28, **characterised in that** the polymer granules have been produced continuously using a twin-screw extruder.

30. The use of the liquid initiator according to one of claims 1 or 18 for the direct production of consumer articles of polylactam in a discontinuous or continuous process of the following types: monomer casting, extrusion, centrifugal casting, injection moulding, rotational moulding, pultrusion, dipping and spraying processes, wherein the liquid initiator is added to the lactam melt in each case.

## Revendications

1. Initiateur liquide pour effectuer la polymérisation anionique de lactame, **caractérisé en ce qu'**il contient un produit réactionnel d'isocyanate I avec un composé protique P, qui est choisi parmi des alcools ayant 1 à 5 atomes de carbone, des amides d'acides carboxyliques et/ou des amines aliphatiques à encombrement stérique, et une base B, dans un milieu de solvatation aprotique S.

2. Initiateur liquide selon la revendication 1, **caractérisé en ce que** l'isocyanate possède une structure de base aliphatique, cycloaliphatique, aromatique ou aliphatique-aromatique.

3. Initiateur liquide selon la revendication 2, **caractérisé en ce que** I est choisi parmi le phényl-isocyanate et les phényl-isocyanates substitués, le cyclohexyle isocyanate, le toluène-diisocyanate, l'isophorone-diisocyanate, le diphénylméthane diisocyanate, diisocyanate de dicyclohexylméthane diisocyanate et l'hexaméthylène diisocyanate et leurs mélanges.

4. Initiateur liquide selon la revendication 2 ou 3, **caractérisé en ce que** les isocyanates se présentent totalement ou partiellement sous une forme cyclisée.

5. Initiateur liquide selon au moins l'une quelconque des revendications 1 à 4, **caractérisé en ce qu'**il contient un produit réactionnel dans lequel l'isocyanate a été remplacé par 1 à 50 pour-cent d'équivalent carbodiimide.

6. initiateur liquide selon au moins l'une quelconque des revendications 1 à 5, **caractérisé en ce que** le composé protique P présente un pk_{A} > 13 et se présente éventuellement sous forme déprotonée.

7. Initiateur liquide selon la revendication 6, **caractérisé en ce que** les amides d'acides carboxyliques sont formés de monomères linéaires et/ou cycliques ayant 2 à 20 atomes de carbone.

8. Initiateur liquide selon au moins l'une quelconque des revendications 1 à 7, **caractérisé en ce que** le cation de la base B est un ion alcalin ou alcalinoterreux ou un tétraalkylammonium et la base est choisie parmi un alcoolate, un amide, un hydrure ou un anion d'alkyle.

9. Initiateur liquide selon la revendication 8, **caractérisé en ce que** la base B est un alcoolate alcalin ou alcalinoterreux.

10. Initiateur liquide selon au moins l'une quelconque des revendications 1 à 9, **caractérisé en ce que** S est un composé organique aliphatique, cycloaliphatique ou aromatique, qui possède des éléments structurels de solvatation qui ne présentent aucun atome d'hydrogène acide.

11. Initiateur liquide selon la revendication 10, **caractérisé en ce que** S est un composé aprotique polaire choisi dans le groupe des polyglycols éthérifiés, des esters liquides d'acide phtalique, des composés d'urée N-alkylée, des amides d'acides carboxyliques N-alkylés ou de leurs mélanges.

12. Initiateur liquide selon la revendication 11,
**caractérisé en ce que** le composé d'urée est une tétraalkylurée ayant 1 à 12 atomes de carbone, en particulier choisie dans le groupe de la tétraméthylurée, de la tétraéthylurée et de la tétrabutylurée, ou une structure cyclique de formule générale I : 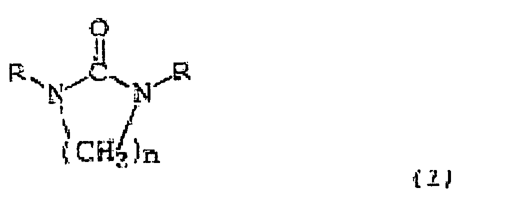 dans laquelle R est un radical alkyle ayant 1 à 5 atomes de carbone, en particulier un radical méthyle, et où n est 2 ou 3.

13. Initiateur liquide selon la revendication 11, **caractérisé en ce que** S est un amide d'acide carboxylique N-alkylé cyclique de 5 à 7 éléments et le radical alkyle possède 1 à 12 atomes de carbone, des hétéroatomes pouvant également être présents.

14. Initiateur liquide selon la revendication 11, **caractérisé en ce que** S est la N-méthylpyrrolidone, la N-octylpyrrolidone, la N-cyclohexylpyrrolidone, le N-octylcaprolactame ou un de leurs mélanges.

15. Initiateur liquide selon la revendication 11, **caractérisé en ce que** le milieu de solvatation est un mélange de dérivé d'urée et d'amide d'acide.

16. Initiateur liquide selon au moins l'une quelconque des revendications 1 à 15, **caractérisé en ce qu'**il contient également des adjuvants requis par la fabrication et/ou l'utilisation.

17. Initiateur liquide selon au moins l'une quelconque des revendications 1 à 16, **caractérisé en ce que** le produit réactionnel a été obtenu sous réserve que B:P:I ait été utilisé dans le rapport 0,2-1,1:0,2-4:1.

18. Initiateur liquide selon la revendication 17, **caractérisé en ce que** le rapport molaire B:P:I est de 0,8-1,1:0,8-1,2:1.

19. Procédé de fabrication d'un initiateur liquide selon au moins l'une quelconque des revendications 1 à 18, **caractérisé en ce que** le produit réactionnel est fabriqué dans le milieu de solvatation S sous gaz inerte et en absence d'humidité dans une plage allant de la température ambiante à 140°C, les solvants de faibles poids moléculaires pour la base et les produits de neutralisation de la base, en particulier, les alcools de faibles poids moléculaires, étant éliminés.

20. Procédé selon la revendication 19, **caractérisé en ce que**, dans une étape précédente, on fait réagir le composé protique P avec la base B, de sorte que P se présente sous forme basique, et le composé déprotoné P est ensuite ajouté, sous forme basique, à l'isocyanate dissous dans le milieu de solvatation S.

21. Procédé selon la revendication 19 ou 20, **caractérisé en ce que**, dans une étape précédente du procédé, on soumet l'isocyanate à une cyclisation pour former l'isocyanurate et on poursuit ensuite l'étape réactionnelle avec une addition stoechiométrique de base.

22. Procédé selon au moins l'une quelconque des revendications 19 à 21, **caractérisé en ce que** l'on dissout P séparément dans une fraction de milieu de solvatation S, on convertit P sous la forme de sel anionique par addition de base B et on élimine les produits réactionnels volatils ainsi que les composants de solvant et de milieu de solvatation gênant la polymérisation et **en ce que** l'on ajoute ensuite ensemble l'isocyanate dans le milieu de solvatation S et le composé déprotoné dissous dans le milieu de solvatation S et on convertit le tout en initiateur liquide.

23. Procédé selon la revendication 19, **caractérisé en ce que** l'on fait réagir l'isocyanate I avec le composé protique P et cet isocyanate coiffé est ensuite déprotoné à l'aide d'une base et converti de la sorte en initiateur liquide.

24. Procédé selon la revendication 22 ou 23, **caractérisé en ce que** l'isocyanate est de préférence utilisé sous forme trimérisée.

25. Granulé de polymère qui peut être fabriqué par polymérisation anionique continue ou discontinue de lactame avec un initiateur liquide selon au moins l'une quelconque des revendications 1 à 18.

26. Granulé de polymère selon la revendication 25, **caractérisé en ce que** l'on utilise comme lactame, du lactame-6 et/ou du lactame-12.

27. Granulé de polymère selon la revendication 25 ou 26, **caractérisé en ce que** l'initiateur liquide a été ajouté à la masse fondue de lactame à une concentration de 0,3 à 10% en poids.

28. Granulé de polymère selon la revendication 27, **caractérisé en ce que** l'on a réglé une concentration de 0,5 à 3% en poids.

29. Granulé de polymère selon au moins l'une quelconque des revendications 25 à 28, **caractérisé en ce que** le granulé de polymère est fabriqué en continu dans une extrudeuse à bi-vis.

30. Utilisation de l'initiateur liquide selon l'une des revendications 1 ou 18, pour la fabrication directe d'objets utilitaires de polylactame selon un procédé en discontinu ou en continu des types suivants : coulage de monomères, extrusion, moulage par centrifugation, moulage par injection, moulage par rotation, procédés de pultrusion, immersion et pulvérisation, où l'initiateur liquide est respectivement ajouté à la masse fondue de lactame.
